# EUROPEAN PATENT APPLICATION

(11) **EP 3 708 280 A1**
(43) Date of publication of application: **16.09.2020**
(21) Application number: 20166036.2
(22) Date of filing: 10.04.2018
(51) Int. Cl.: B22F 7/06

(54) **MULTI-MATERIALS AND PRINT PARAMETERS FOR ADDITIVE MANUFACTURING**

(30) Priority: 28.04.2017 US 201715582485
(62) Divisional of application: 18792180.4
(71) Applicant: Divergent Technologies, Inc., Los Angeles, California 90502 (US)
(72) Inventor: TENHOUTEN, Broc William, Rancho Palos Verdes, CA California 90275 (US); BUCKNELL, John Russell, El Segundo, CA California 90245 (US); EL NAGA, Eahab Nagi, Topanaga, CA California 90275 (US); CZINGER, Kevin Robert, Santa Monica, CA California 90402 (US)
(74) Representative: Dentons UK and Middle East LLP

(57) **Abstract**

Systems and methods for multi-materials and varying print parameters in Additive Manufacturing systems are provided. In one example, a layer including a first powder material and a second material different from the first powder material are deposited, such that at least a first portion of the first powder material is in a first area that is devoid of the second material. An energy beam is generated and applied to fuse the layer at a plurality of locations. In another example, a layer of a powder material is deposited based on a first subset of parameters. An energy beam is generated based on a second subset of the parameters, and the energy beam is applied to fuse the layer at a plurality of locations based on a third subset of the parameters. At least one of the parameters is set to have different values during a slice printing operation.

## Description

### CROSS-REFERENCE TO RELATED APPLICATION

This application claims the benefit of U.S. Patent Application No. 15/582,485, entitled "MULTI-MATERIALS AND PRINT PARAMETERS FOR ADDITIVE MANUFACTURING" and filed on April 28, 2017, which is expressly incorporated by reference herein in its entirety.

### BACKGROUND

### Field

The present disclosure relates generally to Additive Manufacturing systems, and more particularly, to multi-materials and print parameters in Additive Manufacturing systems.

### Background

Additive Manufacturing ("AM") systems, also described as 3-D printer systems, can produce structures (referred to as build pieces) with geometrically complex shapes, including some shapes that are difficult or impossible to create with conventional manufacturing processes. AM systems, such as powder-bed fusion (PBF) systems, create build pieces layer-by-layer. Each layer or 'slice' is formed by depositing a layer of powder and exposing portions of the powder to an energy beam. The energy beam is applied to melt areas of the powder layer that coincide with the cross-section of the build piece in the layer. The melted powder cools and fuses to form a slice of the build piece. The process can be repeated to form the next slice of the build piece, and so on. Each layer is deposited on top of the previous layer. The resulting structure is a build piece assembled slice-by-slice from the ground up.

PBF systems print slices of build pieces based on a variety of system parameters, such as beam power, scanning rate, deposited powder layer thickness, etc. Adjustments to various parameters can be made in between printing runs, i.e., after a build piece is completely printed. For example, a higher beam power may be used for printing the next build piece.

### SUMMARY

Several aspects of apparatuses and methods for multi-material and print parameters in AM systems will be described more fully hereinafter.

In various aspects, an apparatus for powder-bed fusion can include a depositor that deposits a layer including a powder material and a second material different from the powder material, such that at least a portion of the powder material is in an area that is devoid of the second material, an energy beam source that generates an energy beam, and deflector that applies the energy beam to fuse the layer at a plurality of locations.

In various aspects, an apparatus for powder-bed fusion can include a depositor that deposits a layer including a powder material based on a first subset of parameters, an energy beam source that generates an energy beam based on a second subset of the parameters, a deflector that applies the energy beam to fuse the layer at a plurality of locations based on a third subset of the parameters, and a controller that sets at least one of the parameters to have a first value at a first time during a time period and to have a second value different than the first value during the time period, the time period beginning at a start of the depositing of the layer of powder and ending at an end of the fusing of the layer at the locations. It should be noted that a subset can include a single parameter.

In various aspects, a method for powder-bed fusion can include depositing a layer including a powder material and a second material different from the powder material, such that at least a portion of the powder material is in an area that is devoid of the second material, generating an energy beam, and applying the energy beam to fuse the layer at a plurality of locations.

In various aspects, a method for powder-bed fusion can include depositing a layer including a powder material based on a first subset of a plurality of parameters, generating an energy beam based on a second subset of the parameters, applying the energy beam to fuse the layer at a plurality of locations based on a third subset of the parameters, and setting at least one of the parameters to have a first value at a first time during a time period and to have a second value different than the first value during the time period, the time period beginning at a start of the depositing of the layer of powder and ending at an end of the fusing of the layer at the locations.

Other aspects will become readily apparent to those skilled in the art from the following detailed description, wherein is shown and described only several embodiments by way of illustration. As will be realized by those skilled in the art, concepts herein are capable of other and different embodiments, and several details are capable of modification in various other respects, all without departing from the present disclosure. Accordingly, the drawings and detailed description are to be regarded as illustrative in nature and not as restrictive.

### BRIEF DESCRIPTION OF THE DRAWINGS

Various aspects of will now be presented in the detailed description by way of example, and not by way of limitation, in the accompanying drawings, wherein:
FIGS. 1A-D illustrate an exemplary PBF system during different stages of operation.
FIG. 2 illustrates an exemplary PBF apparatus including multi-material and print parameter variation.
FIG. 3 illustrates another exemplary PBF apparatus including multi-material and print parameter variation with closed-loop control.
FIGS. 4A-C illustrate an exemplary embodiment in which a second material can be deposited prior to depositing a powder material.
FIGS. 5A-C illustrate an exemplary embodiment of a PBF apparatus and method in which multiple materials can be deposited to overlap in a single layer.
FIGS. 6A-C illustrate an exemplary embodiment of a PBF apparatus and method in which a mixed material area can be deposited in layer.
FIGS. 7A-B illustrate an exemplary embodiment of a PBF apparatus and method in which a second material can be deposited on a deposited layer of powder material.
FIGS. 8A-C illustrate an exemplary embodiment of a PBF apparatus and method in which an integrated depositing system can alternately deposit a powder material and a second material.
FIGS. 9A-B illustrate an exemplary embodiment of a PBF apparatus and method in which a second material can be deposited an area of removed powder.
FIG. 10 is a flow chart of an exemplary method of multi-material depositing in PBF systems.
FIGS. 11A-C illustrate an exemplary embodiment of a PBF apparatus and method in which a height of the top surface of deposited powder material can be varied.
FIG. 12 illustrates details of an exemplary energy applicator.
FIGS. 13A-C illustrate a beam scanning operation that can result in a sagging deformation.
FIG 14 illustrates a sagging deformation created by fusing powder material in overhangs areas in multiple, successive powder layers.
FIGS. 15A-C illustrate an exemplary embodiment of a PBF apparatus and method in which an energy beam can be scanned different scanning rates.
FIG. 16 illustrates an exemplary scanning rate parameter.
FIGS. 17A-C illustrate an exemplary embodiment of a PBF apparatus and method in which energy can be applied at different beam powers.
FIG. 18 illustrates an exemplary applied-beam power parameter.
FIG. 19 is a flow chart of an exemplary method of a slice printing operation with variable print parameters in a PBF apparatus.
FIG. 20 is a flow chart of an exemplary method of a slice printing operation with variable values of a scanning rate parameter in a PBF apparatus.
FIG. 21 is a flow chart of an exemplary method of a slice printing operation with variable values of an applied-beam power parameter in a PBF apparatus.

### DETAILED DESCRIPTION

The detailed description set forth below in connection with the appended drawings is intended to provide a description of various exemplary embodiments of the concepts disclosed herein and is not intended to represent the only embodiments in which the disclosure may be practiced. The term "exemplary" used in this disclosure means "serving as an example, instance, or illustration," and should not necessarily be construed as preferred or advantageous over other embodiments presented in this disclosure. The detailed description includes specific details for the purpose of providing a thorough and complete disclosure that fully conveys the scope of the concepts to those skilled in the art. However, the disclosure may be practiced without these specific details. In some instances, well-known structures and components may be shown in block diagram form, or omitted entirely, in order to avoid obscuring the various concepts presented throughout this disclosure.

This disclosure is directed to multi-materials and print parameters in AM systems, such as powder-bed fusion (PBF) systems. In current PBF systems, adjustments to various parameters can be made in between printing runs. In other words, after a build piece is completely printed, adjustments to various parameters can be made. Furthermore, current PBF systems deposit powder layers having a uniform material composition. For example, the powder layer may include a metal powder of a single particle size, or the powder layer may include a uniform mix of metal powder with different particle sizes, etc. In other words, the powder material deposited in the layers does not vary from one region to another.

In various exemplary embodiments described in this disclosure, a parameter (or multiple parameters) of a PBF system can have different values at different times during a slice printing operation. For example, the scanning rate of the energy beam can be faster across one area of a powder layer and slower across another area of the powder layer. In another example, beam power can be varied during a scan of a powder layer. In yet another example, a layer of powder can be deposited such that the layer includes a powder material and a second material different from the powder material, where at least a portion of the powder material is in an area that is devoid of the second material. Some examples of parameters of PBF systems that may have different values during a slice printing operation include powder layer surface height (*e.g*., height of the top surface of deposited material in a layer) and hatch spacing (*e.g*., spacing between scan lines created by the energy beam). Other ways to vary parameters and other ways of depositing multi-material layers will become apparent in light of the present disclosure.

Using multi-material layers and/or varying print parameters can provide several advantages, such as the ability to adjust certain physical characteristics of printed build pieces, e.g., material properties and other characteristics in specific regions of a printed build piece can be optimized for specific purposes. For example, regions of a printed aircraft part that will be exposed to high stress in the aircraft can be made stronger by printing those regions using a different mixture of metal powder (e.g., a metal alloy) than other regions of the part. In another example, a slower scanning rate can be used to fuse regions at the edge of each slice so that the surface of the finished build piece can have improved surface finish quality. Likewise, by increasing the scanning rate to fuse regions in the interior of the slice, the total scan time can be made shorter, and production yield can be increased.

In various embodiments, for example, laser-fused blown powder can be used in combination with powder-bed laser fusing to create build pieces with multiple materials. In other words, a powder material can be deposited in a powder layer, and areas of the layer can be fused with a laser beam, then a different powder material can be blown onto areas of the fused powder while the blown powder is fused by the same or different energy beam. When the process temperatures are compatible, metallic, ceramic or plastic materials can be added to a powder bed fusion structure by blown powder deposition prior to the deposition of the next powder layer. In this fashion, for example, alternating processes can deposit materials with dissimilar material properties.

In various embodiments, for example, powder materials with large spheres of powder can reduce material density of sintered components. A build piece can be created having portions of reduced-density, for example, for the purposes of fluid filtering, heat transfer, etc. The addition of powder material having larger spheres can create local regions of lower density. In addition, various embodiments can include applying a lower-power energy beam and/or a higher scanning rate, which can be applied to the larger-sphere powder material in order to sinter, rather than fuse, the larger-sphere powder material.

In various embodiments, the deposition of a second material can be performed with a robotic arm. For example, the robotic arm can deposit the second material into the layer. Different amounts of the second material may be used at different depths in the layer. In various embodiments, the robotic arm can traverse along x, y, and z axes and rotate about the axes as well.

In various embodiments, a robotic arm can be equipped with a nozzle to dispense powder materials and a vacuum suction tube. The suction tube can remove primary material powders by vacuum suction, giving space for the second material to be deposited. For example, deposition of the second material may be achieved by acoustic vibration, such that the amount of powder dispensed by the robotic arm can be carefully tuned by controlling the amplitude and frequency of the vibration. Acoustic vibration can be applied by attaching piezoelectric actuators near the ends of the deposition nozzle. The energy beam is then activated, with a set of parameter values optimized for the second material.

In various embodiments, a liquid second material can be deposited with a jet-type printer mechanism in one pass or in multiple passes. The deposited second material can be dried prior to fusing, for example.

In various embodiments, using slower scanning speed and varying melt pools to print regions at or near an overhang can be particularly advantageous to reduce or prevent part deformation (e.g. sagging) using minimal support structures. In another example, the powder depositor can deposit the powder such that the top surface of the powder layer is non-uniform, e.g., has dips and/or bulges. For example, in areas in which sagging will occur when the powder is fused, a thicker layer of powder can be deposited so that the material can be fused at a greater height, such that when sagging occurs, the desired final geometry is achieved. In other words, extra powder can be deposited to compensate for sagging before the sagging occurs. For builds using support structures, on the other hand, the support structures can be printed to be brittle in comparison to the actual build piece so that the support structures can be removed easily.

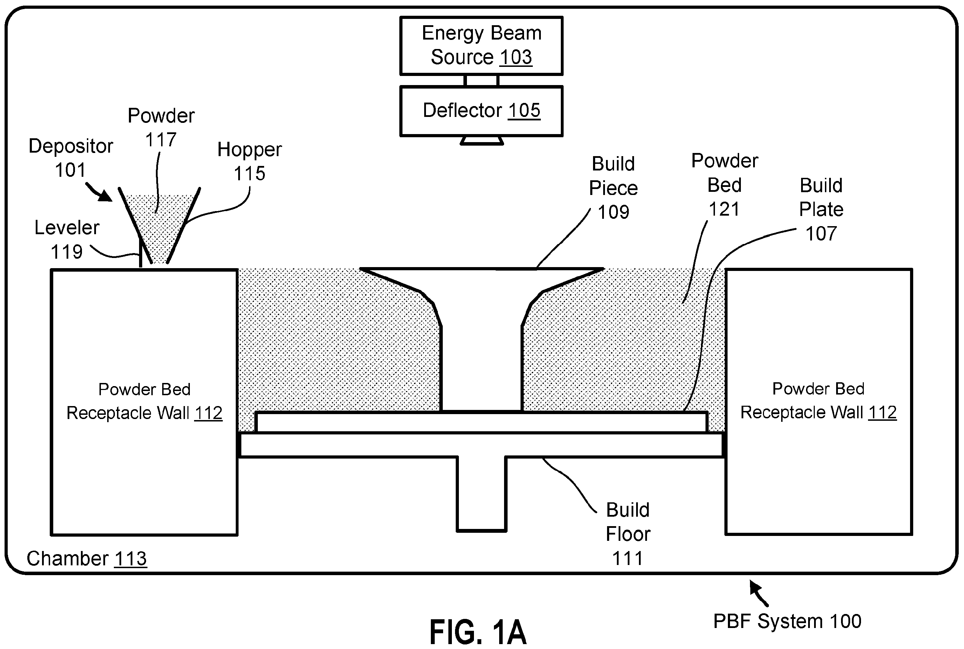

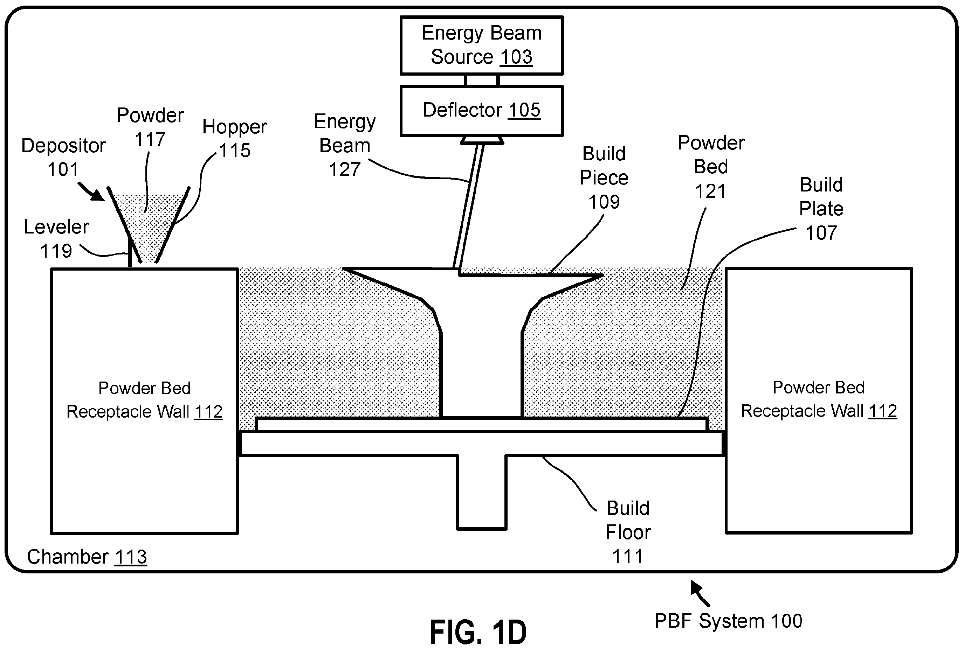

FIGS. 1A-D illustrate respective side views of an exemplary PBF system 100 during different stages of operation. As noted above, the particular embodiment illustrated in FIGS. 1A-D is one of many suitable examples of a PBF system employing principles of this disclosure. It should also be noted that elements of FIGS. 1A-D and the other figures in this disclosure are not necessarily drawn to scale, but may be drawn larger or smaller for the purpose of better illustration of concepts described herein. PBF system 100 can include a depositor 101 that can deposit each layer of metal powder, an energy beam source 103 that can generate an energy beam, a deflector 105 that can apply the energy beam to fuse the powder material, and a build plate 107 that can support one or more build pieces, such as a build piece 109. PBF system 100 can also include a build floor 111 positioned within a powder bed receptacle. The walls of the powder bed receptacle 112 generally define the boundaries of the powder bed receptacle, which is sandwiched between the walls 112 from the side and abuts a portion of the build floor 111 below. Build floor 111 can progressively lower build plate 107 so that depositor 101 can deposit a next layer. The entire mechanism may reside in a chamber 113 that can enclose the other components, thereby protecting the equipment, enabling atmospheric and temperature regulation and mitigating contamination risks. Depositor 101 can include a hopper 115 that contains a powder 117, such as a metal powder, and a leveler 119 that can level the top of each layer of deposited powder.

Referring specifically to FIG. 1A, this figure shows PBF system 100 after a slice of build piece 109 has been fused, but before the next layer of powder has been deposited. In fact, FIG. 1A illustrates a time at which PBF system 100 has already deposited and fused slices in multiple layers, e.g., 150 layers, to form the current state of build piece 109, e.g., formed of 150 slices. The multiple layers already deposited have created a powder bed 121, which includes powder that was deposited but not fused.

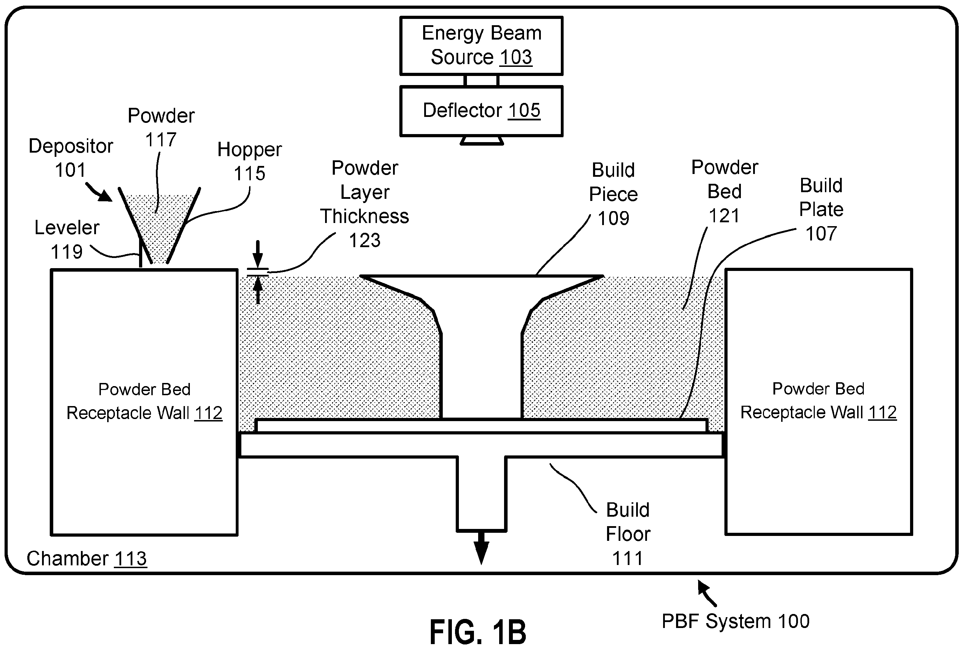

FIG. 1B shows PBF system 100 at a stage in which build floor 111 can lower by a powder layer thickness 123. The lowering of build floor 111 causes build piece 109 and powder bed 121 to drop by powder layer thickness 123, so that the top of the build piece and powder bed are lower than the top of powder bed receptacle wall 112 by an amount equal to the powder layer thickness. In this way, for example, a space with a consistent thickness equal to powder layer thickness 123 can be created over the tops of build piece 109 and powder bed 121.

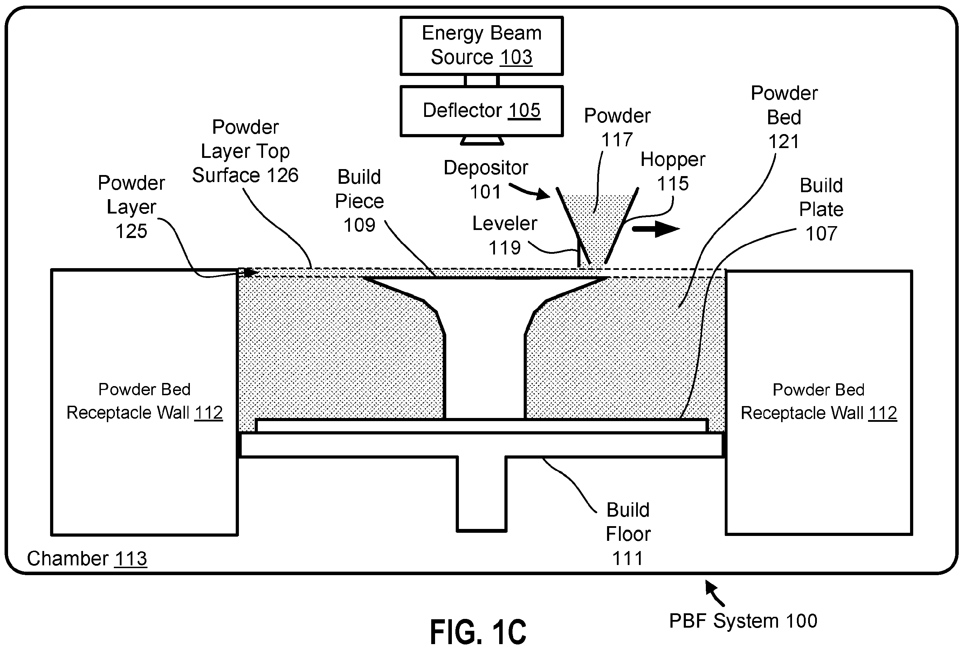

FIG. 1C shows PBF system 100 at a stage in which depositor 101 is positioned to deposit powder 117 in a space created over the top of build piece 109 and powder bed 121 and bounded by powder bed receptacle walls 112. In this example, depositor 101 progressively moves over the defined space while releasing powder 117 from hopper 115. Leveler 119 can level the released powder to form a powder layer 125 that has a thickness substantially equal to the powder layer thickness 123 (*see* FIG. 1B) and that has a powder layer top surface 126 that is substantially flat. Thus, the powder in a PBF system can be supported by a powder material support structure, which can include, for example, a build plate 107, a build floor 111, a build piece 109, walls 112, and the like. It should be noted that for clarity, the illustrated thickness of powder layer 125 (i.e., powder layer thickness 123 (FIG. 1B)) is shown greater than an actual thickness used for the example involving 150 previously-deposited layers discussed above with reference to FIG. 1A.

FIG. ID shows PBF system 100 at a stage in which, following the deposition of powder layer 125 (FIG. 1C), energy beam source 103 generates an energy beam 127 and deflector 105 applies the energy beam to fuse the next slice in build piece 109. In various exemplary embodiments, energy beam source 103 can be an electron beam source, in which case energy beam 127 constitutes an electron beam. Deflector 105 can include deflection plates that can generate an electric field or a magnetic field that selectively deflects the electron beam to cause the electron beam to scan across areas designated to be fused. In various embodiments, energy beam source 103 can be a laser, in which case energy beam 127 is a laser beam. Deflector 105 can include an optical system that uses reflection and/or refraction to manipulate the laser beam to scan selected areas to be fused.

In various embodiments, the deflector 105 can include one or more gimbals and actuators that can rotate and/or translate the energy beam source to position the energy beam. In various embodiments, energy beam source 103 and/or deflector 105 can modulate the energy beam, e.g., turn the energy beam on and off as the deflector scans so that the energy beam is applied only in the appropriate areas of the powder layer. For example, in various embodiments, the energy beam can be modulated by a digital signal processor (DSP).

The operations of a PBF system, such as depositing the powder layer, generating the energy beam, scanning the energy beam, etc., are controlled based on the system parameters of the PBF system (also referred to simply as "parameters" herein). For example, one parameter is the power of the energy beam generated by the energy beam source. In various PBF systems, the beam power parameter may be represented by, for example, a grid voltage of an electron beam source, a wattage output of a laser beam source, etc. Another example of a parameter is the scanning rate of the deflector, i.e., how quickly the deflector scans the energy beam across the powder layer. The scanning rate parameter can be represented, for example, by a rate of change of a deflection voltage applied to deflection plates in an electron beam PBF system, an actuator motor voltage applied to a motor connected to a scanning mirror in a laser beam PBF system, etc. Another example of a parameter is the height of a powder leveler above a top surface of a previous powder layer, which can be represented as a distance of extension of the leveler, for example.

In various embodiments, at least one of the parameters has a first value at a first time during a slice printing operation, i.e., the time period beginning at the start of the depositing of the layer of powder and ending at an end of the fusing of the layer at various locations, and has a second value different than the first value during the slice printing operation. For example, a PBF apparatus can include a depositor that deposits a layer of a powder material based on a first subset of parameters (e.g., powder leveler height, composition of the deposited material, etc.), an energy beam source that generates an energy beam based on a second subset of the parameters (e.g., beam power), and a deflector that applies the energy beam to fuse the layer at multiple locations based on a third subset of the parameters (e.g., scanning rate), and at least one of the parameters can have different values during the slice printing operation.

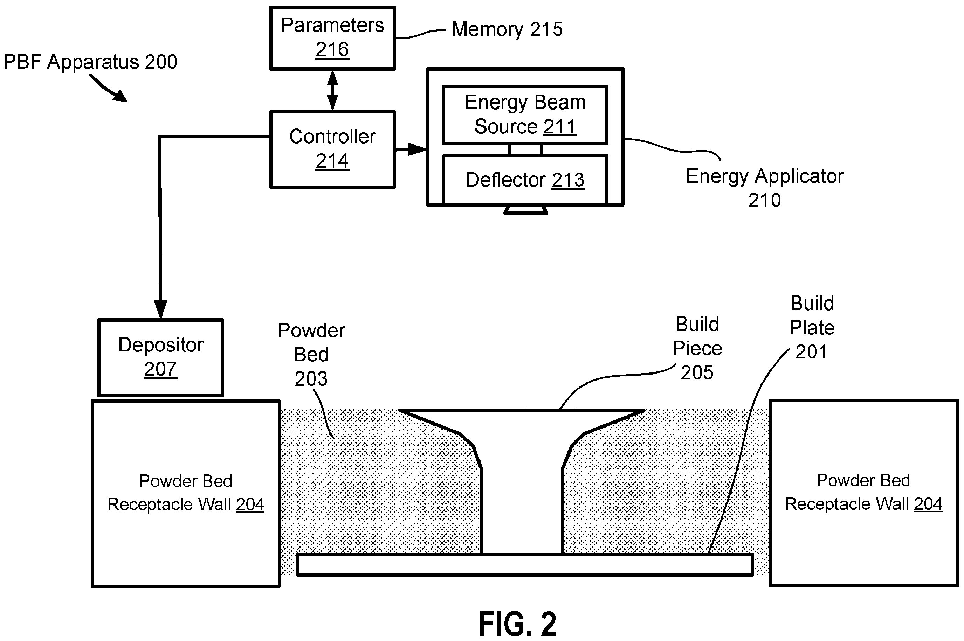

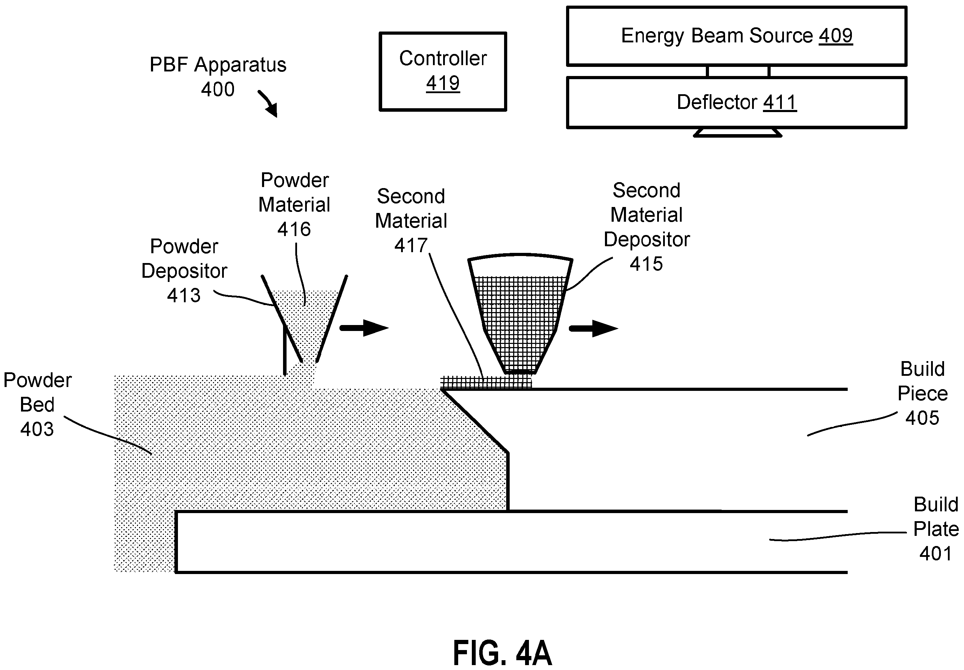

FIG. 2 illustrates an exemplary PBF apparatus 200 including multi-material and print parameter variation capabilities. FIG. 2 shows a build plate 201, a powder bed 203 within powder bed receptacle walls 204, and a build piece 205 in the powder bed. A depositor 207 can deposit layers of material including powder material in powder bed 203, and an energy applicator 210 can apply energy to fuse the powder material in the deposited layers. Depositor 207 can include one or more separate depositors that each deposit a different material, as described in more detail below with respect to FIGS. 4A-C, 5A-C, 6A-C, 7A-B, 8A-C, and 9A-B. Energy applicator 210 can include an energy beam source 211 that generates an energy beam and a deflector 213 that scans the energy beam across the deposited layer. PBF apparatus 200 can also include a controller 214, which can be, for example, a computer processor. PBF apparatus 200 can also include a computer memory 215, such as a random access memory (RAM), computer storage disk (e.g., hard disk drive, solid state drive, flash drive), etc. Controller 214 can store parameters 216 in memory 215. Controller 214 can control components of PBF apparatus 200 based on parameters 216. For example, controller 214 can use parameters 216 to determine the scanning rate, beam power, etc., to form each slice of build piece 205. In other words, controller 214 can control depositor 207 to deposit a layer of material, can control energy beam source 211 to generate the energy beam, and can control deflector 213 to scan the energy beam across the deposited layer.

Parameters 216 can include a parameter (or multiple parameters) that has two or more different values during a slice printing operation of PBF apparatus 200. For example, an applied-beam power parameter can have a lower power value at one time during the printing operation and can have a higher power at another time during the operation. For example, controller 214 can set a lower applied-beam power parameter value for one area of the powder layer (e.g., over a non-deformed area of the build piece) and can set a higher applied-beam power parameter value for another area of the powder layer (e.g., over a sagging area of the build piece). In this exemplary embodiment, changes in the parameter (i.e., different parameter values) can be determined and stored in memory 215 prior to the printing of build piece 205.

In various embodiments, the controller can be a shared processor, for example, as shown in the exemplary embodiment of FIG. 2. In various embodiments, the controller can be a distributed system, for example, with each component having an individual controller. For example, the depositor can have a separate controller, the energy beam source can have a separate controller, the deflector can have a separate controller, etc. Likewise the parameters can be stored in a shared memory, can be stored in individual memories associated with individual components, or can be a combination of these approach.

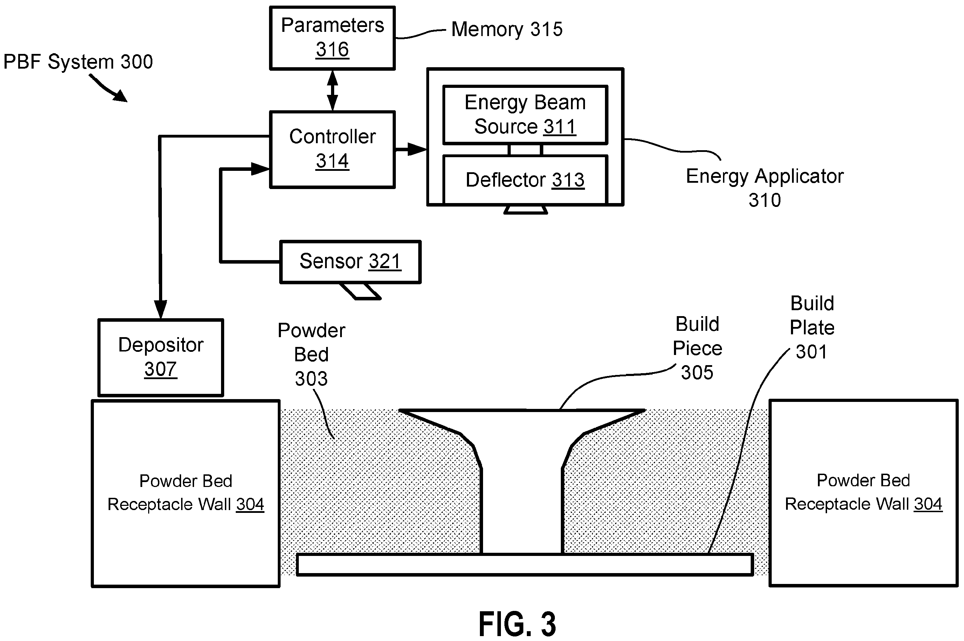

FIG. 3 illustrates another exemplary PBF apparatus 300 including multi-material and print parameter variation with closed-loop control. FIG. 3 shows a build plate 301, a powder bed 303 within powder bed receptacle walls 304, and a build piece 305 in the powder bed. A depositor 307 can deposit layers of material including powder material in powder bed 303, and an energy applicator 310 can apply energy to fuse the powder material in the deposited layers. Energy applicator 310 can include an energy beam source 311 that generates an energy beam and a deflector 313 that scans the energy beam across the deposited layer. PBF apparatus 300 can also include a controller 314, which can be, for example, a computer processor. PBF apparatus 300 can also include a computer memory 315, such as a random access memory (RAM), computer storage disk (e.g., hard disk drive, solid state drive, flash drive), etc. Memory 315 can store parameters 316 for controlling components of PBF apparatus 300. Parameters 316 can include a parameter (or multiple parameters) that has two or more different values during a slice printing operation and that can be changed during operation of PBF apparatus 300. Controller 314 can use parameters 316 to determine the scanning rate, beam power, etc., to form each slice of build piece 305. In particular, controller 314 can control depositor 307 to deposit a layer of material, can control energy beam source 311 to generate the energy beam, and can control deflector 313 to scan the energy beam across the deposited layer. Further, in various embodiments, controller 314 can control these components in the manner recited by using different determined values or types of parameters, and/or by using different determined subsets or combinations of parameters, in order to achieve a desired result for the specific printing operation at issue (such as managing overhangs, enhancing surface finish quality, optimizing printing speed, optimizing an overall combination of these and other operations, etc.).

PBF apparatus 300 can include a sensor 321 that obtains information relating to the depositing of the layer, the fusing of the powder material, etc. In this example, sensor 321 can sense information about the shape of build piece 305. For example, sensor 321 can include an optical sensor, such as a camera. Sensor 321 can sense shape information 323, e.g., dimensional measurements, of build piece 305 and can send the shape information to controller 314. For example, after each slice of build piece 305 is fused by energy application system 309, sensor 321 can sense the shape of the build piece before the next layer of powder material is deposited and send the sensed shape to controller 314.

In this example, controller 314 can change the values of one or more parameter 316 in memory 315 based on information received from sensor 321. For example, sensor 321 can sense an irregularity in an edge area of the top slice of build piece 305, and controller 314 can change a trajectory of the energy beam generated by energy beam source 311 in the edge area during the fusing of the next slice to correct the resultant outlying shape of a printed region. In this way, for example, the beam power parameter can change during the fusing of the next slice because the beam power is higher when applied in the edge area and lower when applied in other areas of the next layer. In the exemplary embodiment above, a parameter can be modified during the operation of PBF apparatus 300 based on feedback information received through sensor 321 resulting in a closed-loop control of parameters.

In various embodiments, the sensor can include an edge sensor that senses information of an edge of fused powder material. For example, problems with fusing often can occur at or near the edge of a slice. In these cases, an edge sensor may provide beneficial information about the shape of the edge of a slice.

In various embodiments, a PBF apparatus can include a depositor that deposits a layer including a powder material and a second material that is different from the powder material using, for example, separate depositors, an integrated depositor, etc. The depositing can be done in such a way that at least a portion of the powder material is in an area that is devoid of the second material after the layer is deposited. In this way, for example, the PBF apparatus can deposit multiple materials in a single layer, i.e., the material composition of the layer can be non-uniform across different areas of the layer.

FIGS. 4A-C, 5A-C, 6A-C, 7A-B, 8A-C, and 9A-B will now be described. These figures illustrate various exemplary embodiments of apparatuses and methods in which multiple materials can be deposited in a single layer in PBF apparatuses.

FIGS. 4A-C illustrate an exemplary embodiment in which a second material can be deposited prior to depositing a powder material. For example, a first component of the depositor can pass over the work area and deposit the second material in the desired areas, then another component of the depositor can pass over the work area and deposit the layer of powder in the remaining areas.

FIGS. 4A-C illustrate an exemplary embodiment of a PBF apparatus 400 and method in which multiple materials can be deposited in a single layer. FIGS. 4A-C show a build plate 401 and a powder bed 403. In powder bed 403 is a build piece 405. PBF apparatus 400 can include an energy beam source 409, a deflector 411, and a depositor that includes a powder depositor 413 and a second material depositor 415. Powder depositor 413 can include powder material 416, and second material depositor 415 can include a second material 417. Powder depositor 413 and a second material depositor 415 can be controlled by a controller 419 based on one or more parameters, as discussed above with respect to FIGS. 2 and 3.

FIG. 4A shows an exemplary operation of PBF apparatus 400 to deposit multiple materials in a single layer. Second material depositor 415 can move across the work area to deposit second material 417 in an area of the layer. Powder depositor 413 can move across the work area following second material depositor 415 and deposit powder in a remaining area of the layer.

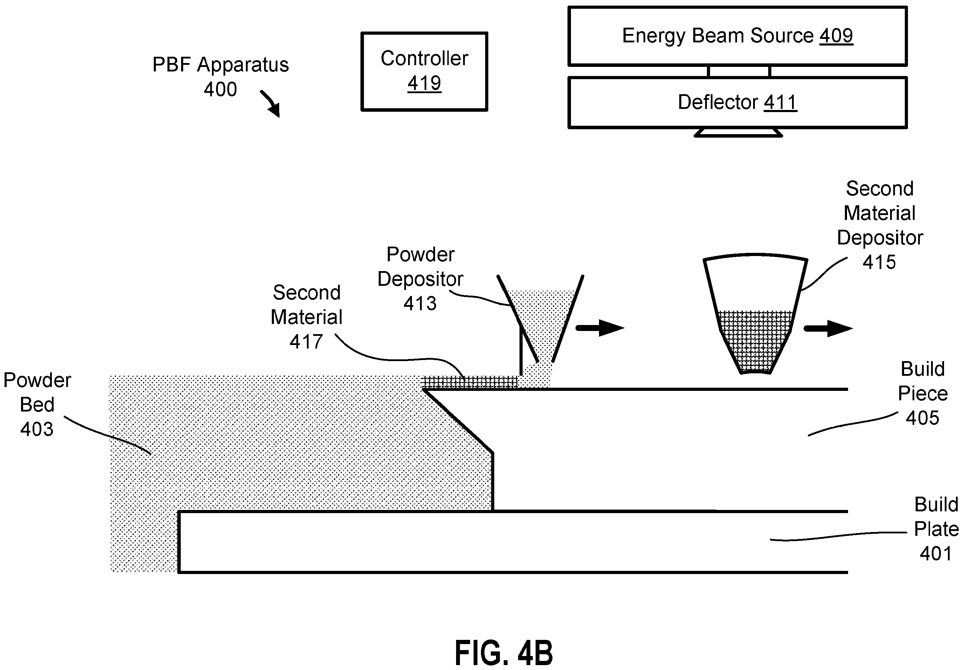

As shown in FIG. 4B, after the second material 417 has been deposited, powder depositor 413 can continue to move, thus crossing over the second material. In this example, powder depositor 413 can continue to release powder, and the leveler of the powder depositor can sweep across the top surface of second material 417 to clear the powder from the surface. In other embodiments, the powder depositor can interrupt the supply of powder as the powder depositor crosses over second material, for example.

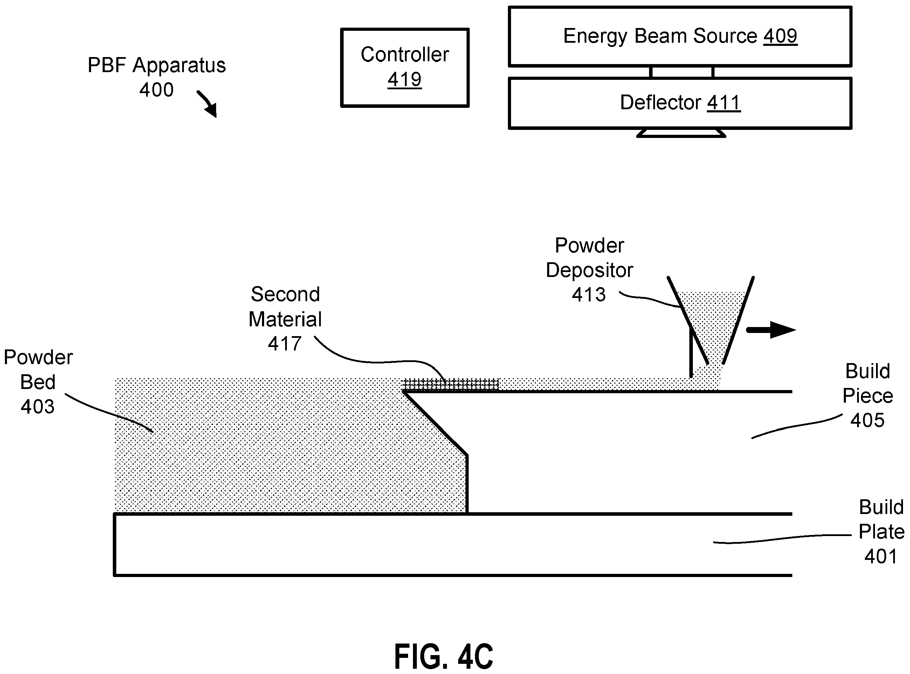

FIG. 4C shows a state in which second material depositor 415 has moved across the work area and has finished depositing second material 417 in the current layer. Powder depositor 413 can continue to move across the work area and deposit powder in the remaining area that does not include second material 417.

In various exemplary embodiments, the second material depositor can be an automated robotic arm configured to deposit second material in desired areas of the layer. In various exemplary embodiments, the robotic arm may be built in to the PBF apparatus and as such, can operate under control of the same processing and timing mechanisms and in synchronization with the other components for depositing second material, such as depositor 413.

It is noted that in the exemplary embodiment of FIGS. 4A-C, the completed layer includes an area of the powder material only (i.e., devoid of the second material) and an area of the second material only (i.e., devoid of the powder material) because the second material is deposited before the powder material.

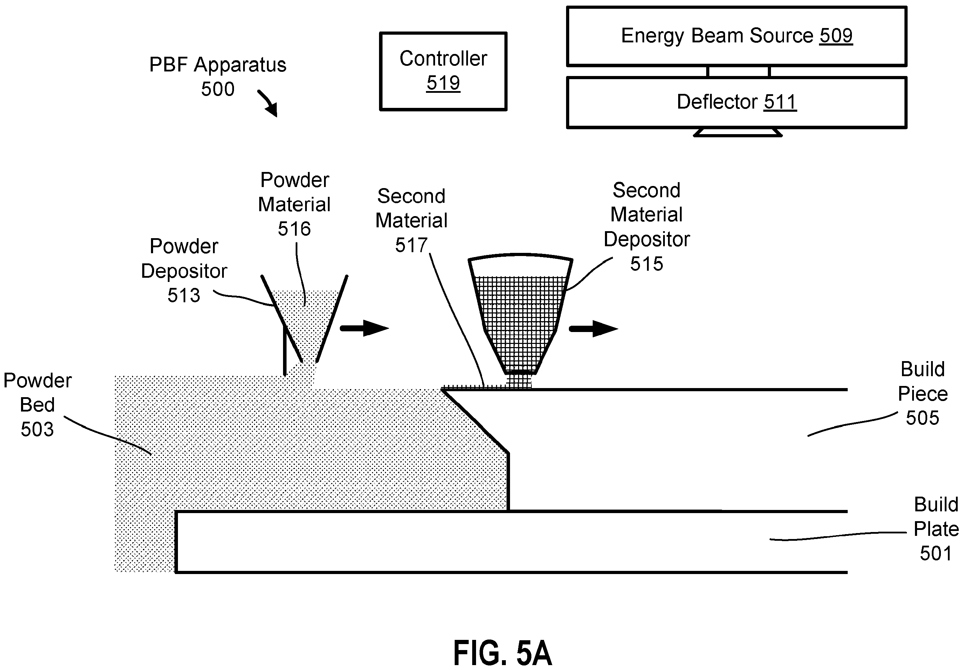

FIGS. 5A-C illustrate an exemplary embodiment of a PBF apparatus 500 and method in which multiple materials can be deposited to overlap in a single layer. FIGS. 5A-C show a build plate 501 and a powder bed 503. In powder bed 503 is a build piece 505. PBF apparatus 500 can include an energy beam source 509, a deflector 511, and a depositor that includes a powder depositor 513 and a second material depositor 515. Powder depositor 513 can include powder material 516, and second material depositor 515 can include a second material 517. Powder depositor 513 and a second material depositor 515 can be controlled by a controller 519 based on one or more parameter, as discussed above with respect to FIGS. 2 and 3.

FIG. 5A shows an exemplary operation of PBF apparatus 500 to deposit overlapping materials in a single layer. Second material depositor 515 can move across the work area to deposit a thin layer of second material 517 in an area of the layer. Powder depositor 513 can move across the work area following second material depositor 515 and deposit powder in a remaining area of the layer.

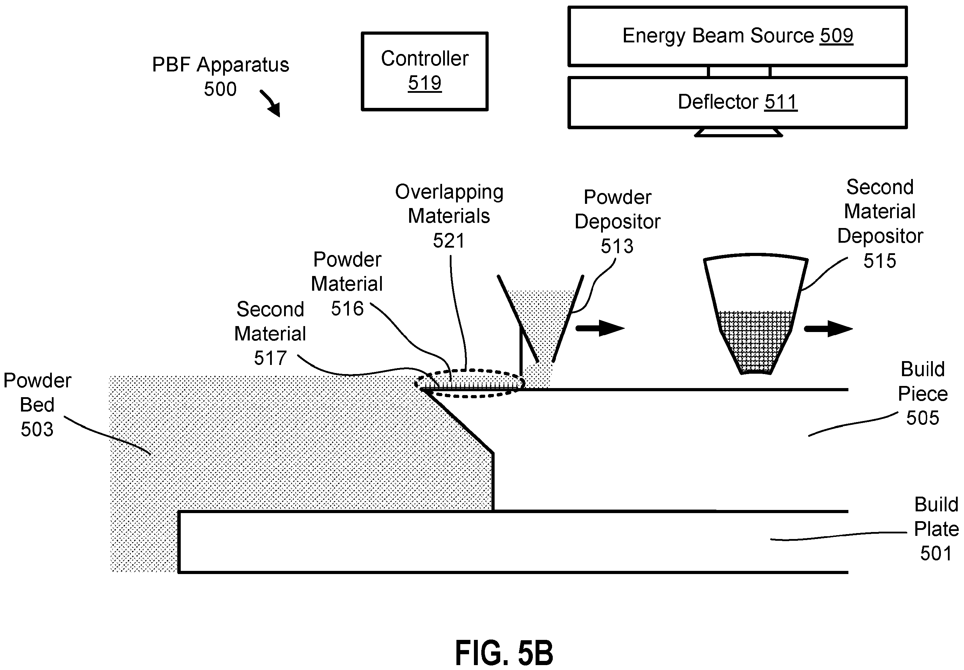

As shown in FIG. 5B, after the thin layer of second material 517 has been deposited, powder depositor 513 can continue to move, thus crossing over the thin layer of second material. Powder depositor 513 can continue to release powder over the thin layer of second material 517 to create overlapping materials 521 in the layer, which includes a region of powder material 516 overlapping a region of second material 517.

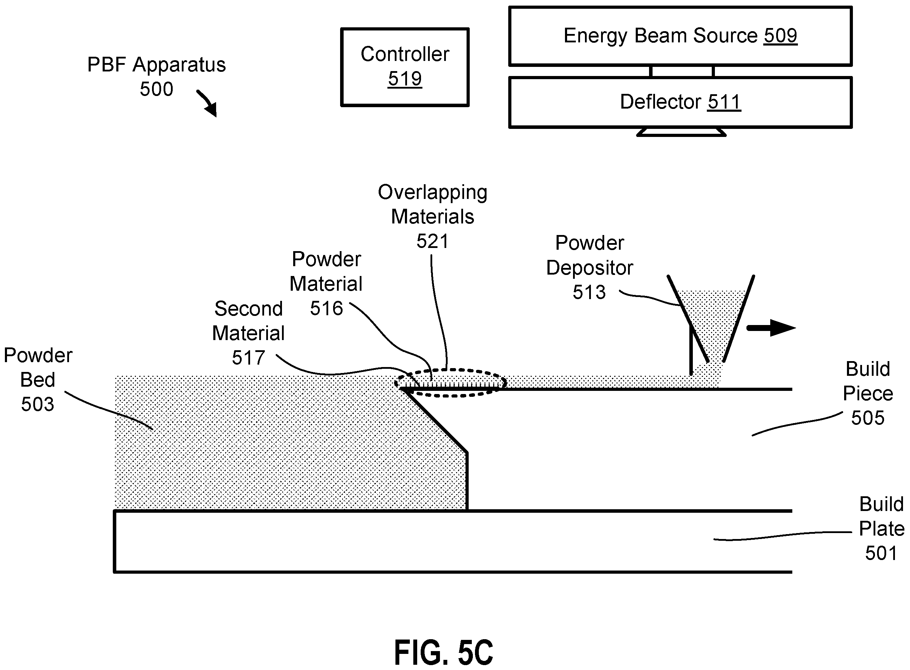

FIG. 5C shows a state in which second material depositor 515 has moved across the work area and has finished depositing second material 517 in the current layer. Powder depositor 513 can continue to move across the work area and deposit powder in the remaining area that does not include second material 517.

It is noted that in the exemplary embodiment of FIGS. 5A-C, the completed layer includes an area of the powder material only (i.e., devoid of the second material) and an area including both the powder material and the second material (i.e., the overlapping materials).

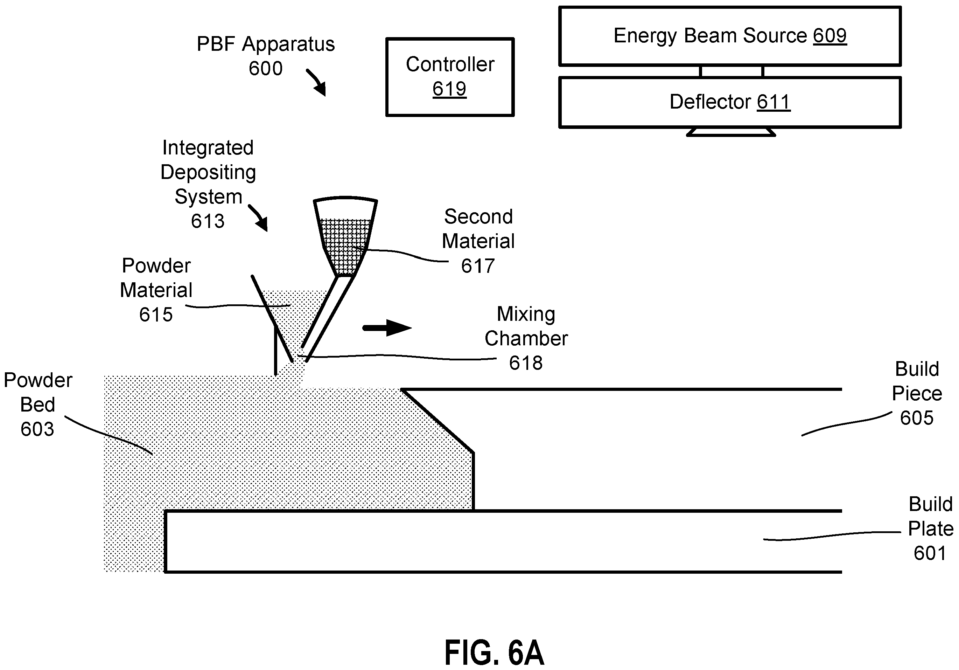

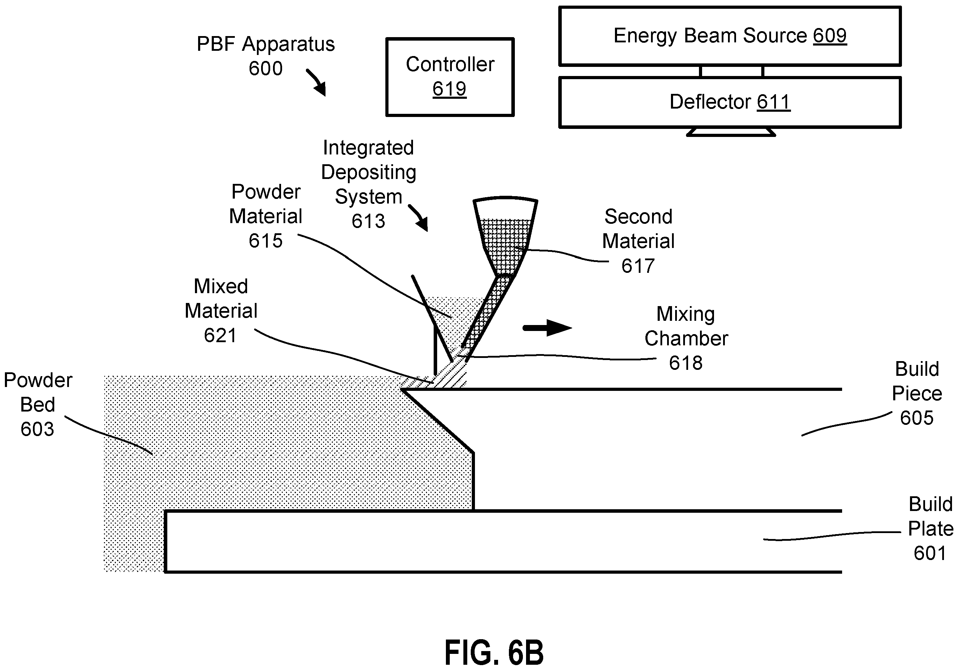

FIGS. 6A-C illustrate an exemplary embodiment of a PBF apparatus 600 and method in which a mixed material area can be deposited in layer. FIGS. 6A-C show a build plate 601 and a powder bed 603. In powder bed 603 is a build piece 605. PBF apparatus 600 can include an energy beam source 609, a deflector 611, and an integrated depositing system 613 that can deposit a powder material 615 and a second material 617. Integrated depositing system 613 also includes a mixing chamber 618 in which powder material 615 and second material 617 can be mixed, as illustrated in FIG. 6B below. Integrated depositing system 613 can be controlled by a controller 619 based on one or more parameters, as discussed above with respect to FIGS. 2 and 3.

FIG. 6A shows an exemplary operation to deposit powder material 615 in the layer. Integrated depositing system 613 can move across the work area depositing only powder material 615 in an area of the layer.

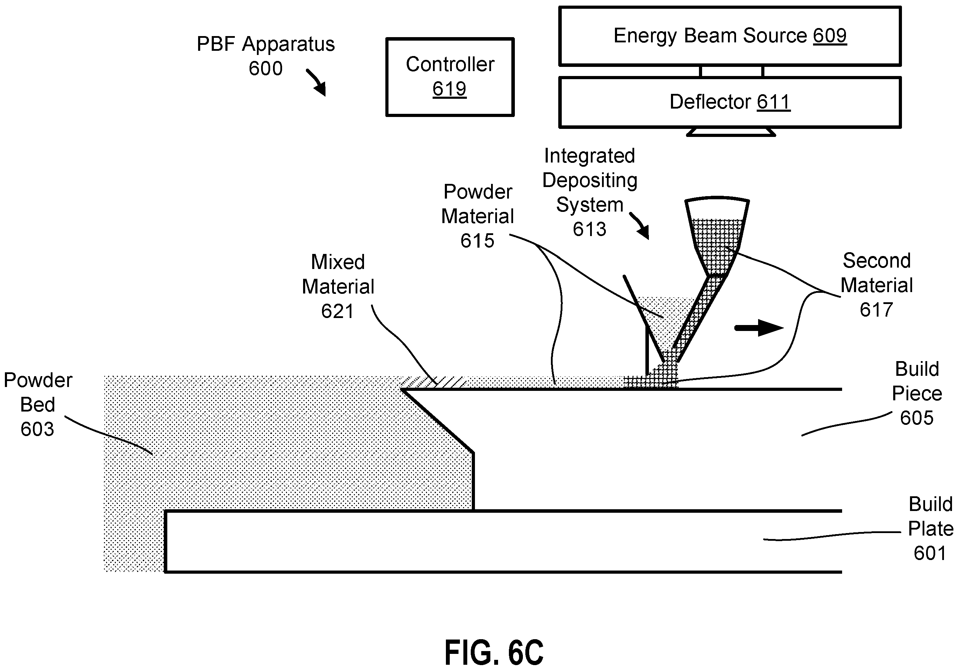

FIG. 6B shows an exemplary operation to deposit a mixed material 621 in the layer. Specifically, integrated depositing system 613 can inject powder material 615 and second material 617 into mixing chamber 618 to create mixed material 621, which can be deposited in the layer. In various embodiments, the ratio of powder material 615 and second material 617 can be varied, for example, to create mixed materials having different properties. FIG. 6C shows an exemplary operation to deposit second material 617 in the layer. In particular, integrated depositing system 613 can only deposit second material 617 in an area of the layer.

It is noted that in the exemplary embodiment of FIGS. 6A-C, the completed layer includes an area of the powder material only (i.e., devoid of the second material), an area of the second material only (i.e., devoid of the powder material), and an area including both the powder material and the second material (i.e., the mixed material).

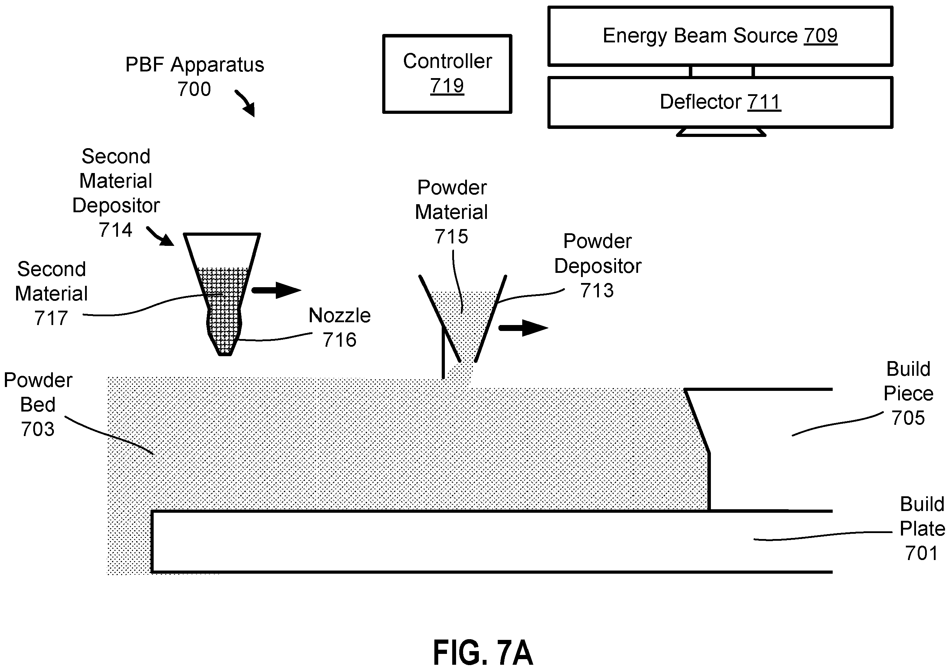

FIGS. 7A-B illustrate an exemplary embodiment of a PBF apparatus 700 and method in which a second material can be deposited on a deposited layer of powder material. FIGS. 7A-B show a build plate 701 and a powder bed 703. In powder bed 703 is a build piece 705. PBF apparatus 700 can include an energy beam source 709, a deflector 711, and a depositor that includes a powder depositor 713 and a second material depositor 714. Powder depositor can deposit a powder material 715. In this example, second material depositor can include a nozzle 716 that can deposit a viscous second material 717. Powder depositor 713 and a second material depositor 714 can be controlled by a controller 719 based on one or more parameters, as discussed above with respect to FIGS. 2 and 3.

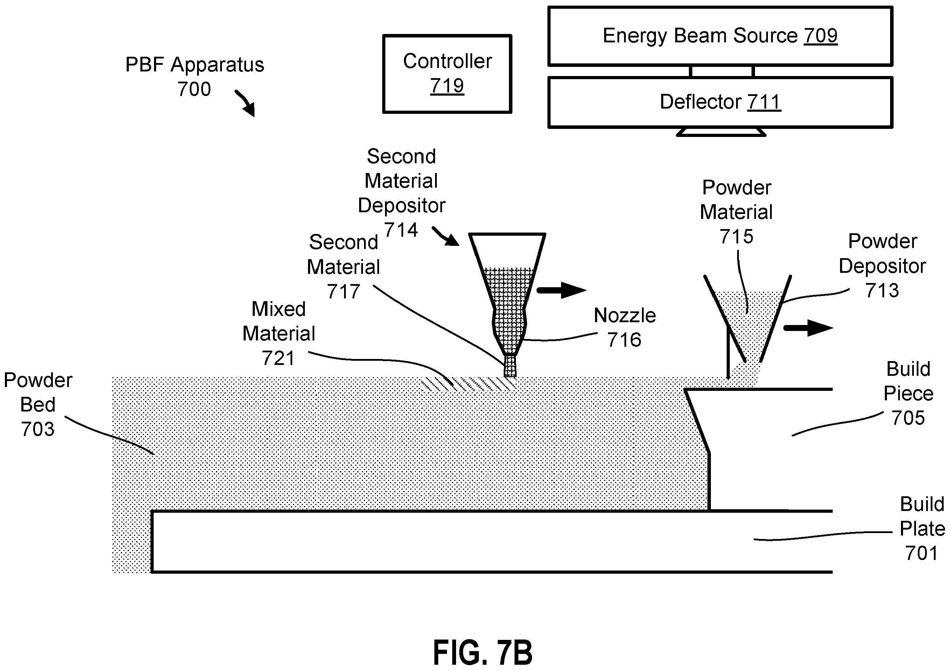

As illustrated in FIG. 7A, powder depositor 713 can move across the work area to deposit a layer of powder. Second material depositor 714 can move across the work area following powder depositor 713. As illustrated in FIG. 7B, second material depositor 714 can deposit second material 717 onto the powder material deposited by powder depositor 713 in certain areas. Because second material 717 is a viscous material in this example, the second material can seep into powder material 715. Specifically, second material 717 can seep into the spaces between the powder particles of powder material 715 to form a mixed material 721. In this way, for example, second material 717 can be deposited on powder material 715 without increasing the height of the powder layer. In various embodiments, a viscous second material can include a liquid, a gel, etc. In various embodiments, a viscous second material could be applied by a print head that tracks across the powder bed behind the depositor 713.

In various embodiments, a liquid or gel deposited in areas of powder material can be used as a fusing aid by, for example, reducing particle scatter (also referred to a 'smoking'), reducing an undesirable chemical reaction with the fusing powder and the surrounding environment and/or other portions of the powder bed. In various embodiments, a liquid second material can be deposited such that the powder material is held in liquid colloidal suspension or solution.

It is noted that in the exemplary embodiment of FIGS. 7A-C, the completed layer includes an area of the powder material only (i.e., devoid of the second material) and an area including both the powder material and the second material only (i.e., the area of the powder material into which the second material has seeped).

In various embodiments, overlapping materials and/or mixed materials (such as those described above with reference to FIGS. 5A-C, 6A-C, and 7A-B) can be fused to create fused materials with different material properties than fused areas elsewhere in the layer. The fusing can be done, for example, using any of the methods of applying an energy beam described herein or can be done by any other method. For example, the powder material can include a first metal and the second material can be a powder material that includes a second metal. An area of overlapping first metal powder and second metal powder can be fused, and the fusing can merge the two metals to create an alloy. In another example, the powder material can have a first size distribution, and the second material can include a powder having a second size distribution different from the first size distribution. In another example, the powder material can be a metal powder and the second material can be a metal-weakening material. In this way, for example, a support structure may be formed of a weakened metal that can be more easily removed. In another example, fusing the second material and the powder material can create a fused material with different electrical properties than the fused powder material alone. For example, the addition of the second material may change the electrical resistance, magnetic properties, etc., versus the fused powder alone.

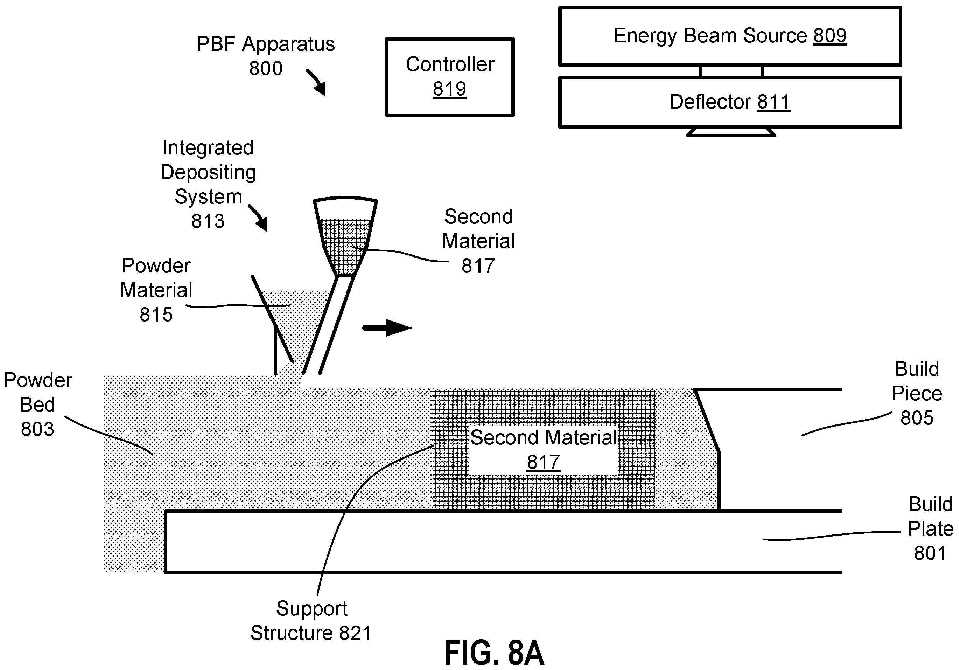

FIGS. 8A-C illustrate an exemplary embodiment of a PBF apparatus 800 and method in which an integrated depositing system can alternately deposit a powder material and a second material. FIGS. 8A-C show a build plate 801 and a powder bed 803. In powder bed 803 is a build piece 805. PBF apparatus 800 can include an energy beam source 809, a deflector 811, and an integrated depositing system 813 that can deposit a powder material 815 and a second material 817. Integrated depositing system 813 can be controlled by a controller 819 based on one or more parameters, as discussed above with respect to FIGS. 2 and 3.

FIG. 8A shows an exemplary operation to deposit powder material 815 in the layer. Integrated depositing system 813 can move across the work area depositing only powder material 815 in an area of the layer.

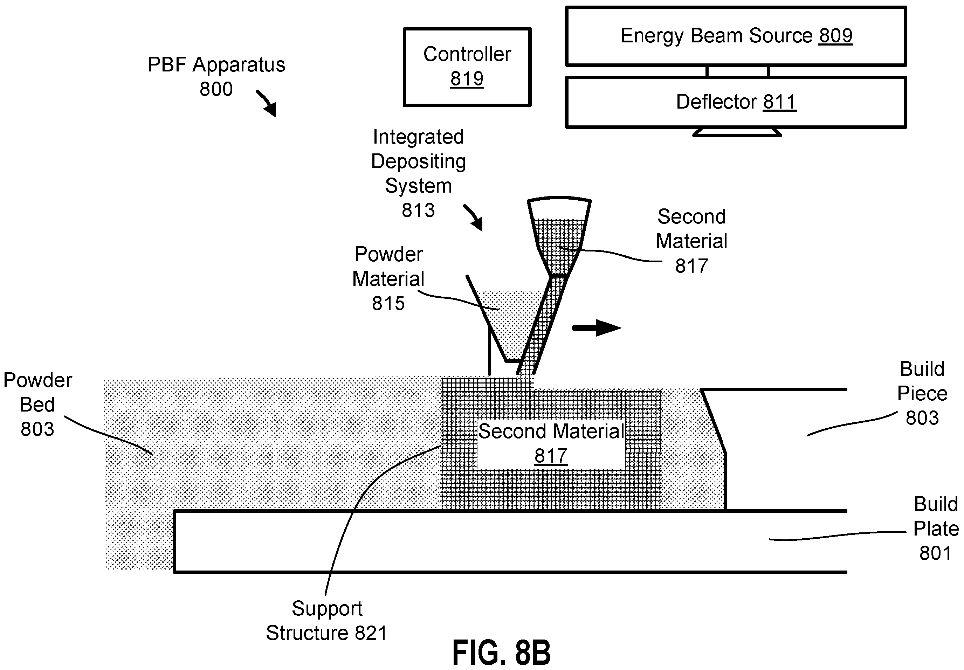

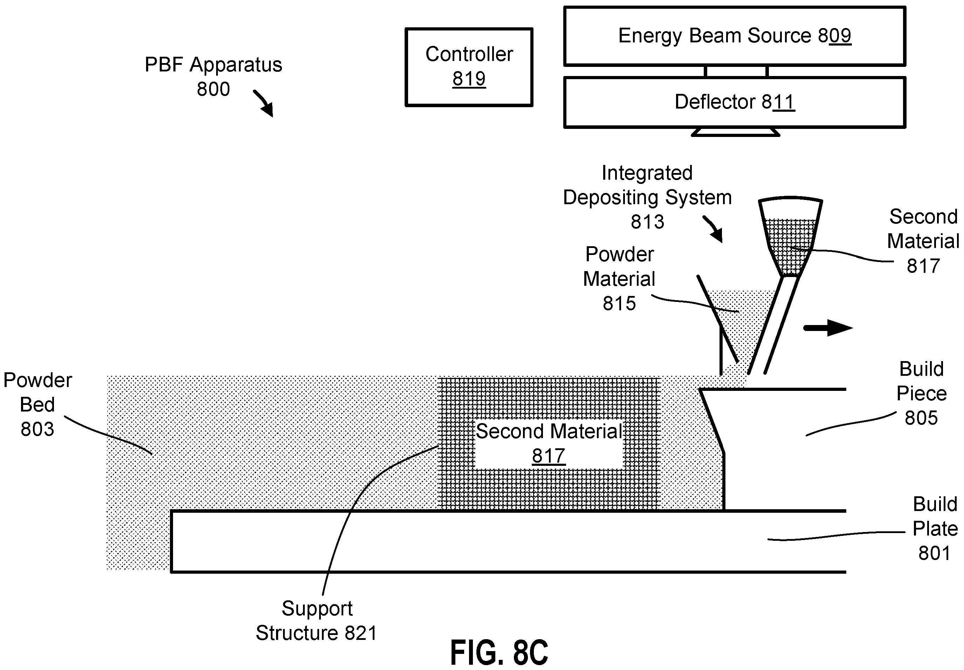

FIG. 8B shows an exemplary operation to deposit only second material 817 in the layer. In this example, integrated depositing system 813 deposits second material 817 to add another layer to a support structure 821 that will support an overhang of build piece 803 in a subsequent layer. Second material can be, for example, a foam, ceramic, etc., that can provide support for fusing powder material in an overhang area and can also be easily removed after the build piece is completed. FIG. 8C shows an exemplary operation to deposit only powder material 815 after second material 817 is deposited in the layer.

It is noted that in the exemplary embodiment of FIGS. 8A-C, the completed layer includes an area of the powder material only (i.e., devoid of the second material) and an area of the second material only (i.e., devoid of the powder material) because the powder material and the second material are alternately deposited.

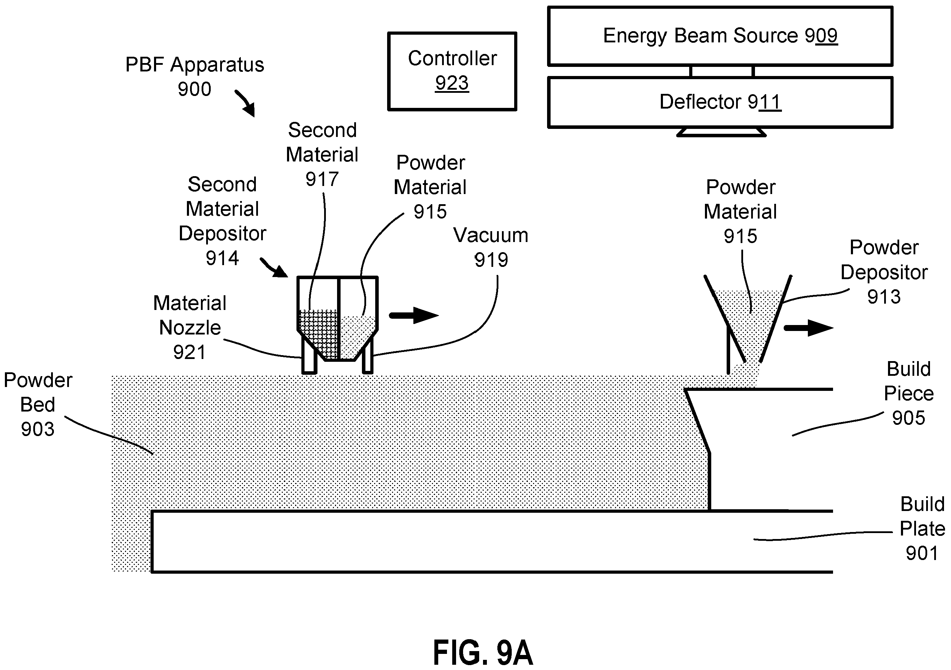

FIGS. 9A-B illustrate an exemplary embodiment of a PBF apparatus 900 and method in which a layer of powder material can be deposited, a portion of the powder material can be removed, and second material can be deposited in the area of the removed powder. In this example, the powder depositor can deposit a layer of powder material, and then a vacuum in the can remove powder material from areas that should be devoid of powder material. The empty areas can then be filled with second material. In various embodiments, other mechanical-based powder removal means may be used.

FIGS. 9A-B show a build plate 901 and a powder bed 903. In powder bed 903 is a build piece 905. PBF apparatus 900 can include an energy beam source 909, a deflector 911, and a depositor that includes a powder depositor 913 and a second material depositor 914. Powder depositor can deposit a powder material 915, and second material depositor 914 can deposit a second material 917. Second material depositor 914 can include a vacuum 919 and a material nozzle 921. Powder depositor 913 and second material depositor 914 can be controlled by a controller 923 based on one or more parameters, as discussed above with respect to FIGS. 2 and 3.

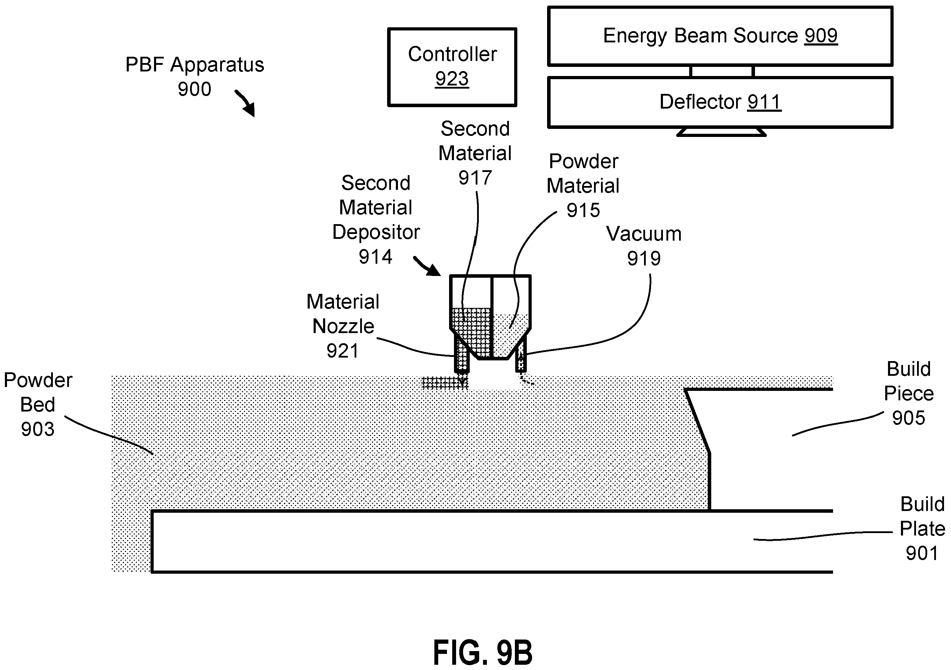

FIG. 9A shows an example operation of PBF apparatus 900 in which powder depositor 913 moves across the work area and deposits a layer of powder, and second material depositor 914 moves across the work area in sequence behind the depositor. Second material depositor 914 in this example is configured to remove powder material deposits from designated portions of the work area using a vacuum mechanism and concurrently or immediately thereafter to deposit second material 917 onto the designated portions. In FIG. 9A, second material depositor 914 is operational but is not yet shown to be activated to perform its functions due to its determined position over the work area. FIG. 9B shows an example of a later state in which second material depositor 914 passes above an area in which second material 917 should be deposited. As second material depositor 914 passes above the area, vacuum 919 can remove deposited powder via suctioning, and material nozzle 921 can deposit second material 917 in the area.

It is noted that in the exemplary embodiment of FIGS. 9A-B, the completed layer includes an area of the powder material only (i.e., devoid of the second material) and an area of the second material only (i.e., devoid of the powder material) because the deposited powder material is removed from an area to create a space that is devoid of powder material.

In various embodiments, multiple layers of powder material can be removed at once. For example, after multiple layers of powder material have been deposited on a build plate, a vacuum could remove powder material in the multiple layers to create a hole that extends down to the build plate. A second material can be deposited in the hole, thus filling the hole up to the top surface of the current layer. In this way, for example, the powder material removal operation need not be performed layer-by-layer, but may be performed once a sufficient number of layers of powder material have been deposited.

In various embodiments in which a second material is deposited, such as in the exemplary embodiments of FIGS. 4A-C, 5A-C, 6A-C, 7A-C, 8A-C, and 9A-B, the second material can be deposited by vibrating the second material, for example, with a vibrating hopper that can distribute the second material more evenly. In various embodiments, the second material can be deposited by blowing the second material, for example, from a nozzle sprayer that can be attached to a container of the second material by a length of tube. In this way, for example, the container of second material can remain stationary while the nozzle is moved across the work area. In various embodiments, the nozzle can be moved across the work area by a moveable arm to deposit the second material.

In various embodiments, areas that include a second material can be fused by, for example, any of the methods described herein or another method. In various embodiments areas that include a second material may not be fused. Furthermore, it should be understood that various embodiments are not limited to depositing a second material, but may also deposit a third material, fourth material, etc., using techniques similar to those described herein, in a variety of different areas of layers.

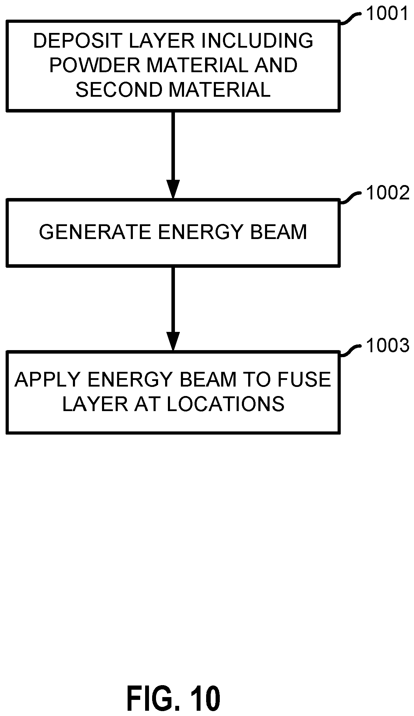

FIG. 10 is a flow chart of an exemplary method of multi-material depositing in a PBF apparatus. The PBF apparatus can deposit (1001) a layer including a powder material and a second material. In other words, a layer including a first powder material and a second material different from the first powder material can be deposited, such that at least a first portion of the first powder material is in a first area that is devoid of the second material. The PBF apparatus can generate (1002) an energy beam and can apply (1003) the energy beam to fuse the layer at a plurality of locations.

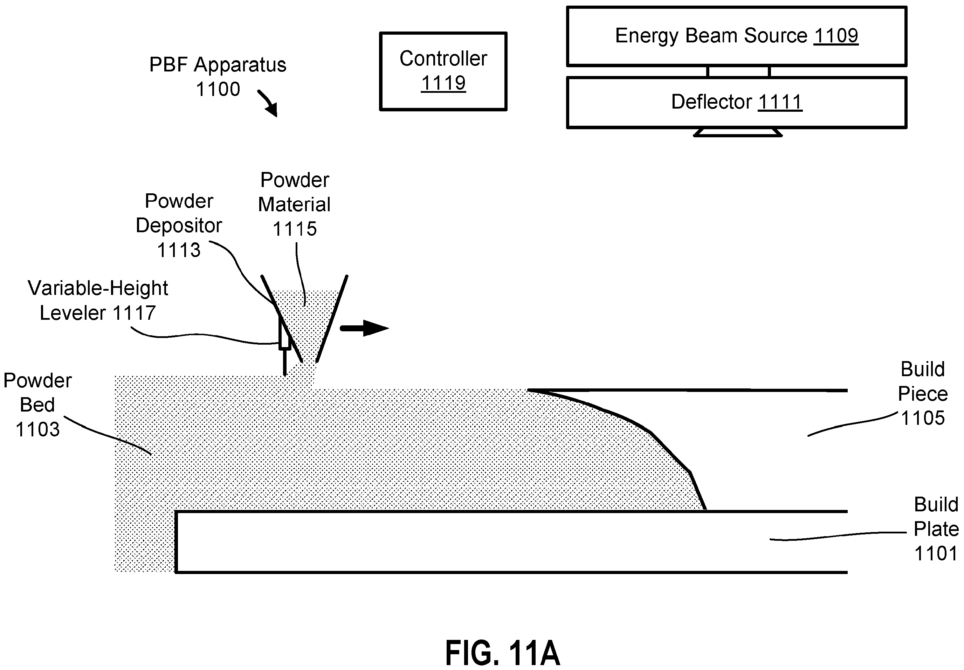

FIGS. 11A-C, 12, 13A-C, 14, 15A-C, 16A-C, and 17-21 will now be discussed. These figures illustrate exemplary embodiments of apparatuses and methods in which a parameter (or multiple parameters) of a PBF apparatus can have different values during a slice printing operation.

FIGS. 11A-C illustrate an exemplary embodiment of a PBF apparatus 1100 and method in which a height of the top surface of deposited powder material can be varied in a powder layer based on a change in a powder height parameter. FIGS. 11A-C show a build plate 1101 and a powder bed 1103. In powder bed 1103 is a build piece 1105. PBF apparatus 1100 can include an energy beam source 1109, a deflector 1111, and a powder depositor 1113 that deposits a powder material 1115. Powder depositor 1113 can include a variable-height leveler 1117 that can be extended and retracted to level deposited powder at different heights. Powder depositor 1113 can be controlled by a controller 1119 based on one or more parameters, as discussed above with respect to FIGS. 2 and 3. In this example, the one or more parameters can be a powder height parameter, such as a leveler height.

FIG. 11A shows an exemplary operation of PBF apparatus 1100 to deposit powder material at a height that produces a powder layer with a standard thickness used for most fusing operations. In particular, variable-height leveler 1117 can be set to an extension length that levels powder material at a height that produces the standard thickness of the powder layer, and powder depositor 1113 can move across the work area depositing powder material to produce the desired thickness as described with reference to several prior embodiments.

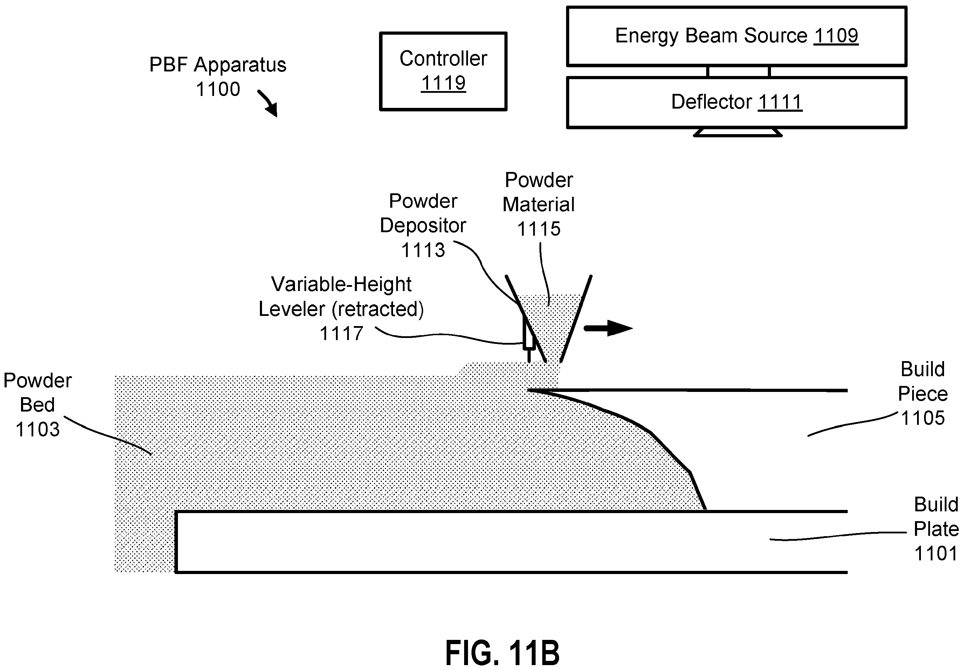

FIG. 11B shows an exemplary operation of PBF apparatus 1100 directed by controller 1119 to deposit powder material at a greater height, which produces a powder layer that is thicker than the standard thickness. In particular, when powder depositor 1113 reaches an area in which a thicker powder layer is to be deposited, controller 1119 can temporarily configure variable-height leveler to retract (e.g., shorten) so that the height of the leveled powder material is correspondingly increased. In this way, for example, the powder layer can be higher in some areas than other areas.

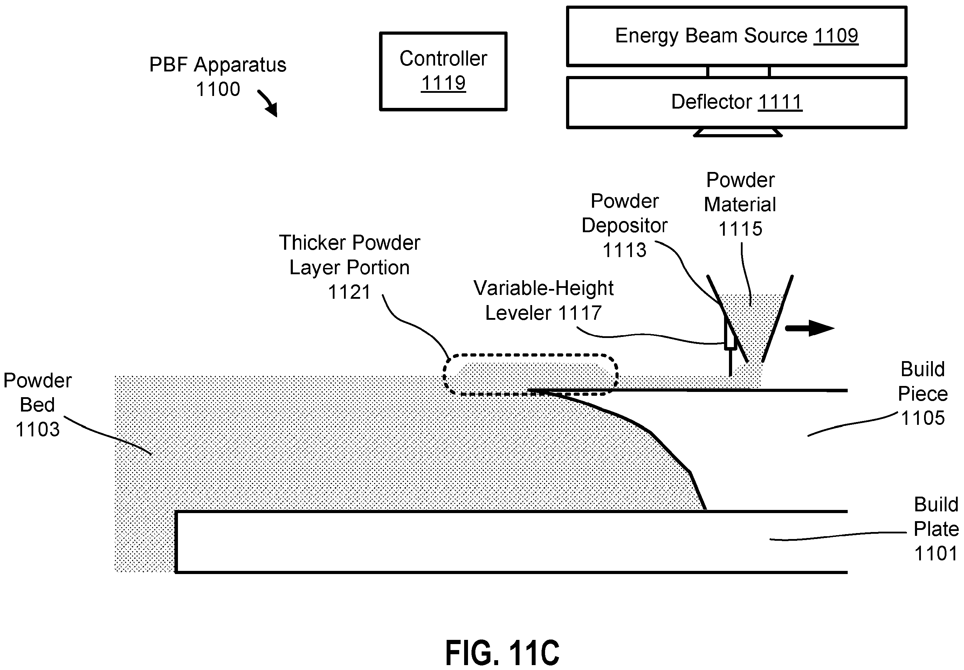

FIG. 11C shows a state in which powder depositor 1113 has moved past the area of thicker powder material, and variable-height leveler has extended back to the original configuration to level the powder material at a height to produce the standard powder layer thickness. The area of thicker powder layer, produced by retracting variable-height leveler, is shown as thicker powder layer portion 1121.

It is noted that, in various embodiments, the ability to vary the height of the top surface of the deposited powder layer, such as with a variable height leveler, can allow the creation of areas in the layer that are devoid of powder material. For example, a variable height leveler can be extended to create a dip in the surface of a layer of powder material. The dip can be, for example, shallow or deep.

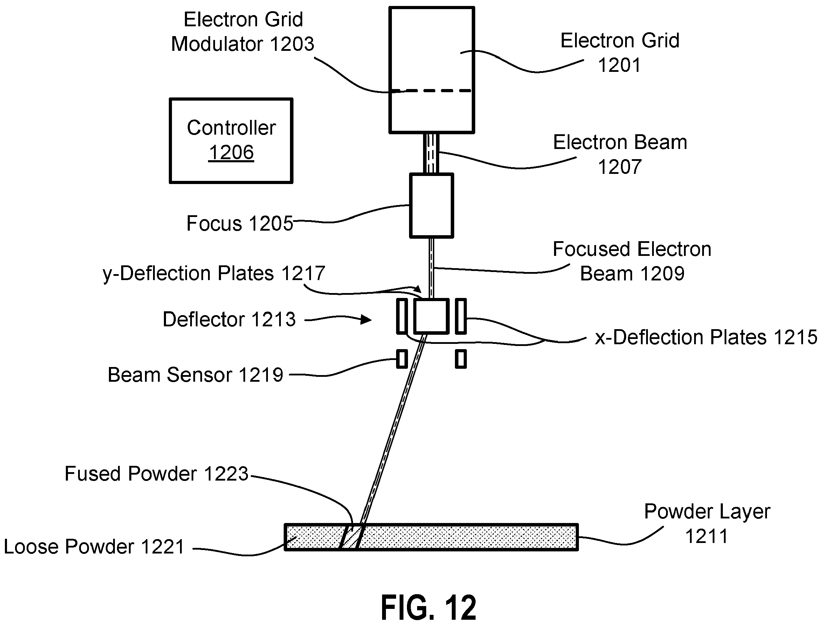

FIG. 12 illustrates details of an exemplary energy applicator. In this example, the energy beam is an electron beam. The energy beam source can include an electron grid 1201, an electron grid modulator 1203, and a focus 1205. A controller 1206 can control electron grid 1201 and electron grid modulator 1203 to generate an electron beam 1207 based on various parameters, such as a grid voltage that controls the beam power, etc., and can control focus 1205 to focus electron beam 1207 into a focused electron beam 1209 based on various parameters, such as a focus voltage that controls the beam focus, etc. To provide a clearer view in the figure, connections between controller 1206 and other components are not shown. Focused electron beam 1209 can be scanned across a powder layer 1211 by a deflector 1213. Deflector 1213 can include two x-deflection plates 1215 and two y-deflection plates 1217, one of which is obscured in FIG. 12. Controller 1206 can control deflector 1213 to generate an electric field between x-deflection plates 1215 to deflect focused electron beam 1209 along the x-direction and to generate an electric field between y-deflection plates 1217 to deflect the focused electron beam along the y-direction. Controller 1206 can control deflector 1213 based on various parameters, such as a defection voltage rate that controls the scanning rate of the electron beam. etc. The various parameters can be stored in a memory (not shown). In various embodiments, a deflector can include one or more magnetic coils to deflect the electron beam.

A beam sensor 1219 can sense the amount of deflection of focused electron beam 1209 and can send this information to controller 1206. Controller 1206 can use this information to adjust the strength of the electric fields in order to achieve the desired amount of deflection. Focused electron beam 1209 can be applied to powder layer 1211 by scanning the focused electron beam to melt loose powder 1221, thus forming fused powder 1223. During a scan of a layer, one of the parameters discussed above (or multiple parameters) can have different values, in accordance with various embodiments.

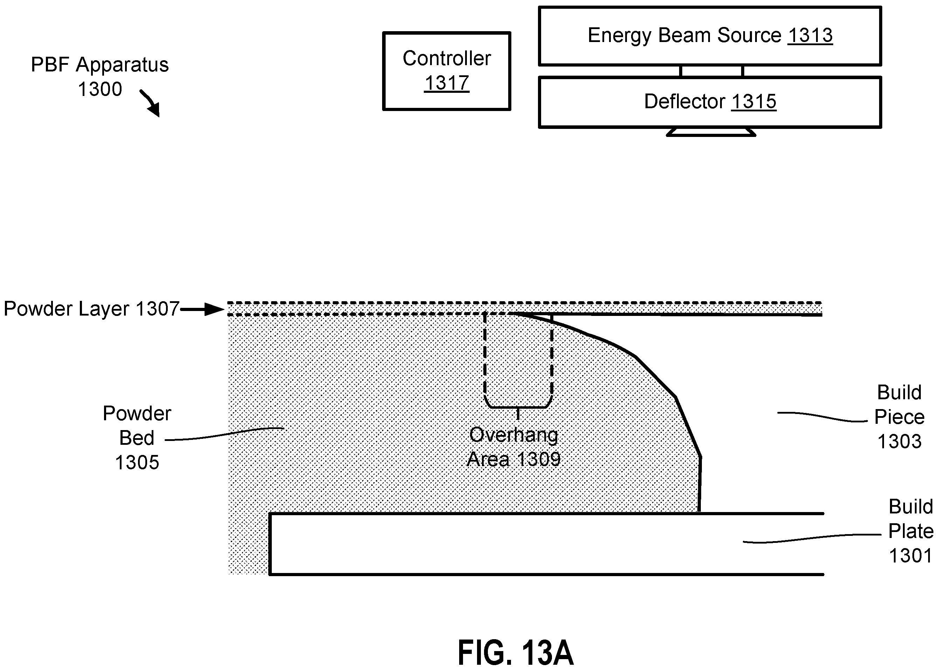

FIGS. 13A-C illustrate a beam scanning operation that can result in a sagging deformation. A PBF apparatus 1300 includes a build plate 1301 on which a build piece 1303 is formed in a powder bed 1305. Powder bed 1305 includes a powder layer 1307. A portion of build piece 1303 includes an overhang area 1309. PBF apparatus 1300 also includes an energy beam source 1313 and a deflector 1315. Controller 1317 can control the operation of energy beam source 1313 and deflector 1315 based on parameters stored in a memory (not shown).

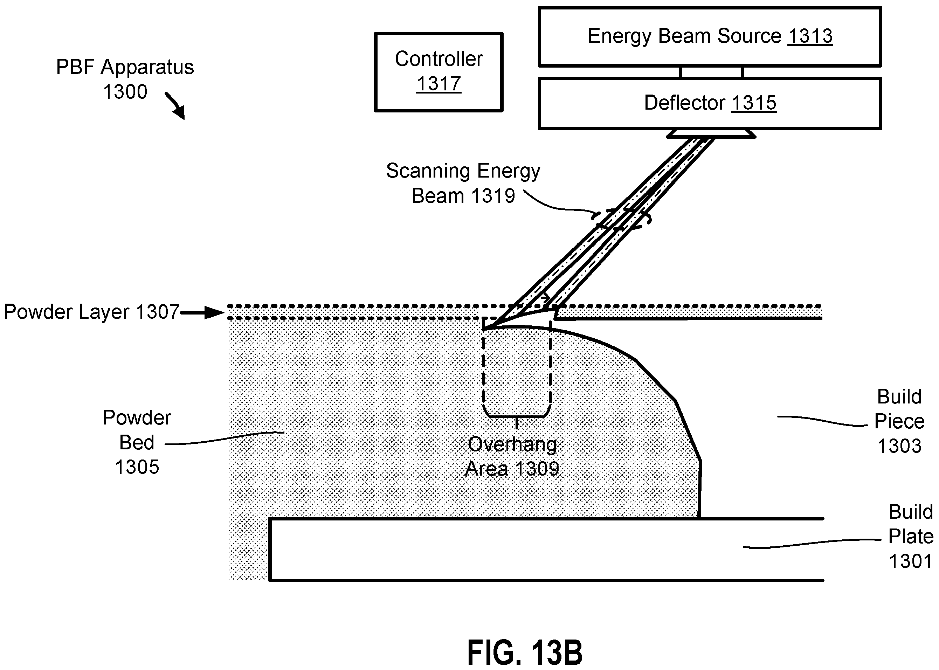

In this example, the parameters of PBF apparatus 1300 do not change. Therefore, FIGS. 13B-C illustrate the fusing of powder by scanning an energy beam at a constant scanning rate.

FIG. 13B illustrates the fusing of powder in a portion of powder layer 1307 in overhang area 1309 by scanning energy beam 1319 at the constant scanning rate. Scanning energy beam 1319 is shown as two energy beams in the figure for the purpose of illustrating that the energy beam is moving. However, it should be understood that only a single energy beam is scanned. It should be noted that other figures in the present disclosure likewise use two energy beams to illustrate a scanning motion.

As shown in FIG. 13B, a portion of the fused powder material in overhang area 1309 can sag below the bottom of powder layer 1307. This sagging can be due to the fact that the melted powder material is denser than the loose powder below, for example. In some cases, a fast scanning rate can exacerbate the sagging. In this case, using a slower scanning rate may allow the sagging to be reduced or prevented by giving the overhang area additional time to fuse and solidify. In other words, using a slower scanning rate may improve the quality of the resulting build piece.

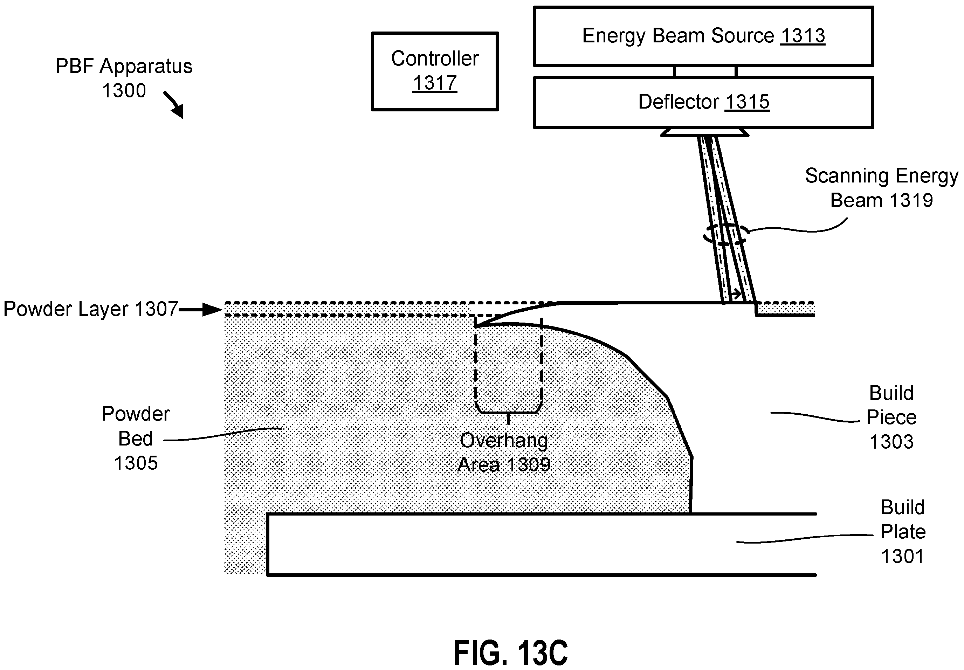

FIG. 13C illustrates the fusing of powder in a portion of powder layer 1307 outside of overhang area 1309 by returning the scanning energy beam 1319 to the constant scanning rate. As shown in FIG. 13C, the scanning rate used for the portion of the powder layer outside of the overhang area does not cause sagging. In this case, using a slower scanning rate would not improve the quality of the resulting build piece, but would increase the print time.

In the example of FIGS. 13A-C, scanning at a constant scanning rate requires a design choice to be made. On the one hand, a slower scanning rate could be used to produce less sagging in the overhang area, thus improving the build quality in the overhang area. However, the slower scanning rate would increase print time and would not improve the quality of other portions of the build piece. On the other hand, a faster scanning rate, such as the scanning rate shown in the figures, can be used to decrease printing time at the expense of build quality in the overhang area.

Moreover, FIGS. 13A-C illustrate sagging that occurs only in one slice of build piece 1303. However, in some build pieces, overhang areas present in multiple, overlapping layers can cause sagging to compound over the multiple layers, which can further reduce build quality.

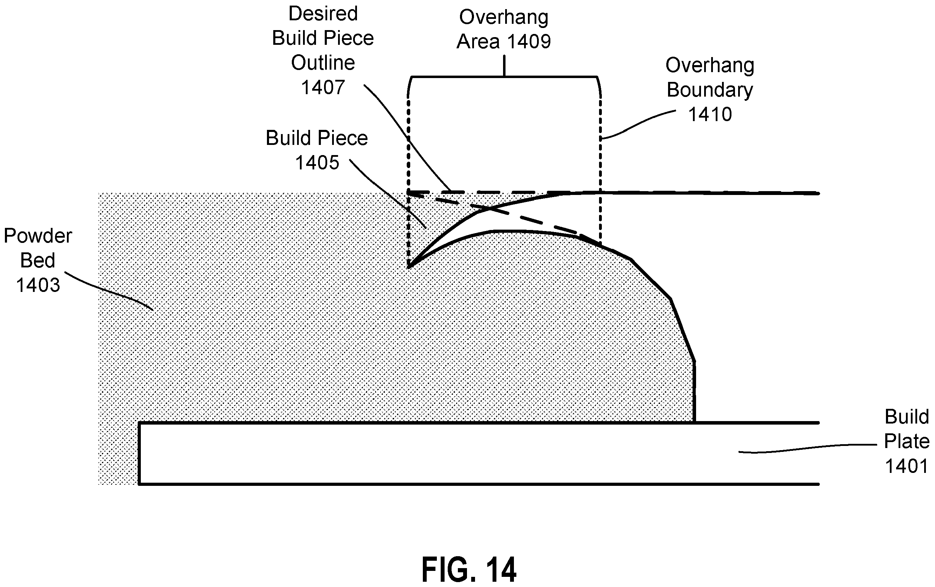

For example, FIG 14 illustrates a sagging deformation created by fusing powder material in overhang areas in multiple, successive powder layers. FIG. 14 shows a build plate 1401 and a powder bed 1403. In powder bed 1403 is a build piece 1405. A desired build piece outline 1407 is illustrated by a dashed line for the purpose of comparison. Build piece 1405 overlaps desired build piece outline 1407 in most places, i.e., in places that have no deformation. Thus, in areas to the right of overhang boundary 1410, the solid line characterizing the build piece 1405 overlaps with the dashed line defined in the desired build piece outline 1407. However, a sagging deformation occurs in an overhang area 1409. In this example, overhang area 1409 is formed from multiple slices fused on top of one another. In this case, the deformation can progressively worsen as overhang area 1409 extends farther from the bulk of build piece 1405.

It should be noted that some problems, such as deformations, higher residual stresses, etc., can occur in areas in which powder in one layer is fused near the edge of the slice in the layer below, even though the fusing does not occur directly over loose powder. For example, unexpectedly high temperatures can result when fusing powder near the edge of a slice below because there is less fused material below to conduct heat away. These problems can be particularly severe where the slices below form a sharp edge.

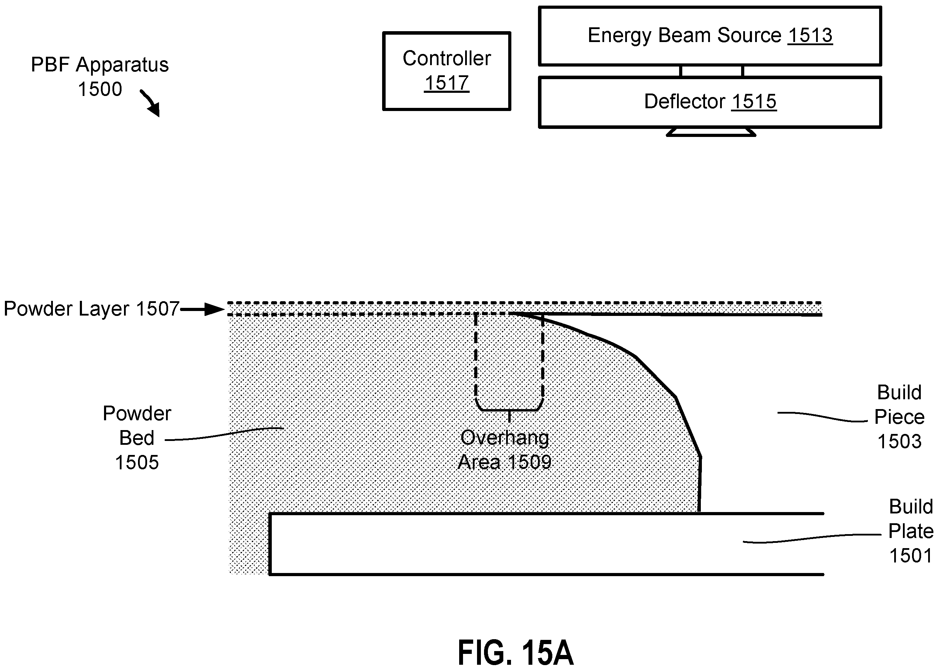

FIGS. 15A-C illustrate an exemplary embodiment of a PBF apparatus 1500 and method in which an energy beam can be scanned at a first scanning rate at a first location in a layer and scanned at a second scanning rate different from the first scanning rate at a different location in the layer. For example, the energy beam can be scanned a faster scanning rate at a location of an overhang area to reduce sagging, and can be scanned at a slower scanning rate at locations outside the overhang area. In particular, the scanning rate affects the total amount of energy applied to an area. For example, a faster scanning rate applies less total energy to the area, while a slower scanning rate applies more total energy to the area.

FIG. 15A illustrates PBF apparatus 1500, which includes a build plate 1501 on which a build piece 1503 is formed in a powder bed 1505. Powder bed 1505 includes a powder layer 1507. A portion of build piece 1503 includes an overhang area 1509. PBF apparatus 1500 also includes an energy beam source 1513 and a deflector 1515. Controller 1517 can set values of various parameters and store the parameters in a memory (not shown), and can control the operation of energy beam source 1513 and deflector 1515 based on the parameters stored in the memory.

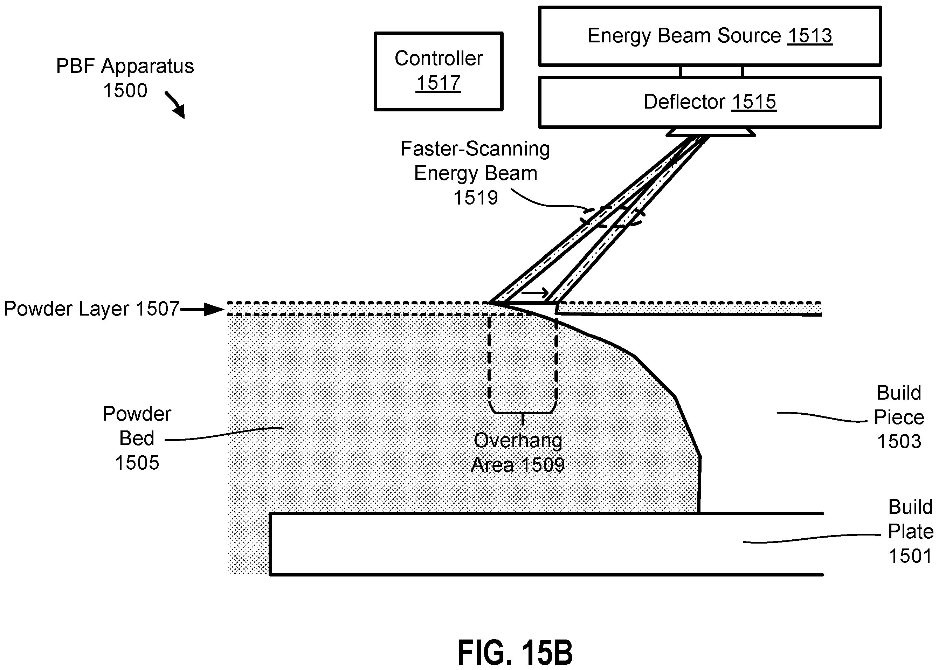

FIG. 15B illustrates the fusing of powder in a portion of powder layer 1507 in overhang area 1509 by a faster-scanning energy beam 1519 at a faster scanning rate. In this case, a scanning rate parameter, such as a deflection voltage change rate, can be set to a value that equates to the faster scanning rate. In this way, for example, the fusing of powder material in overhang area 1509 can be accomplished with reduced or negligible sagging.

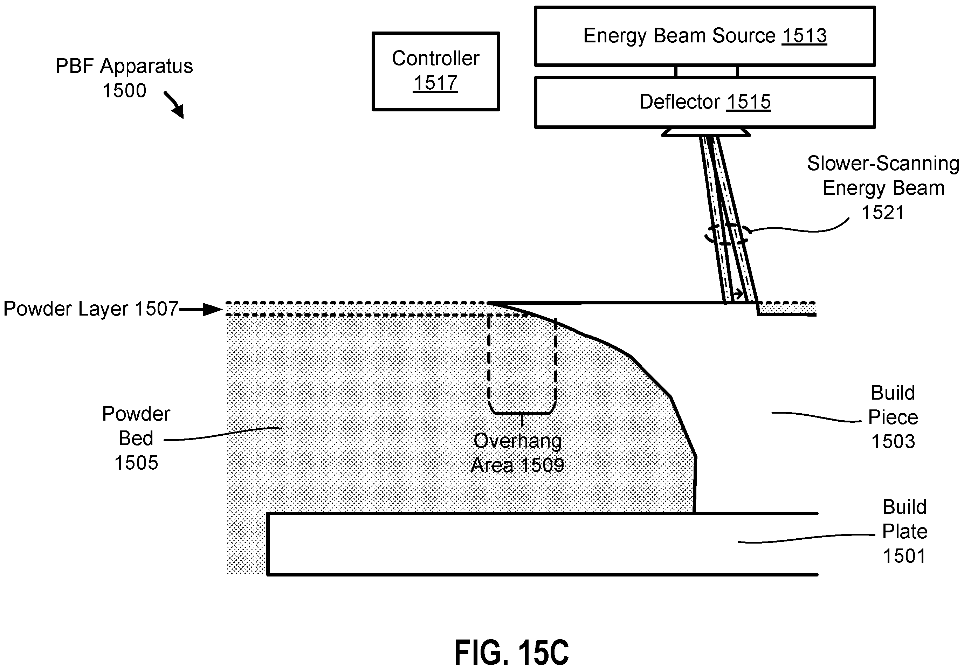

FIG. 15C illustrates the fusing of powder in a portion of powder layer 1507 outside of overhang area 1509 by a slower-scanning energy beam 1521 at a slower scanning rate. In this case, the scanning rate parameter, e.g., deflection voltage change rate, can be set to a value that equates to a slower scanning rate than faster-scanning energy beam 1519. Thus, the scanning rate parameter can change during the scanning of powder layer 1507. In this way, for example, an energy beam can be applied to fuse the powder material in an area that has an outer edge, and the energy beam can be scanned at a faster scanning rate at a location that is closer to the outer edge than the scanning rate of the energy beam at a location that is further from the outer edge.

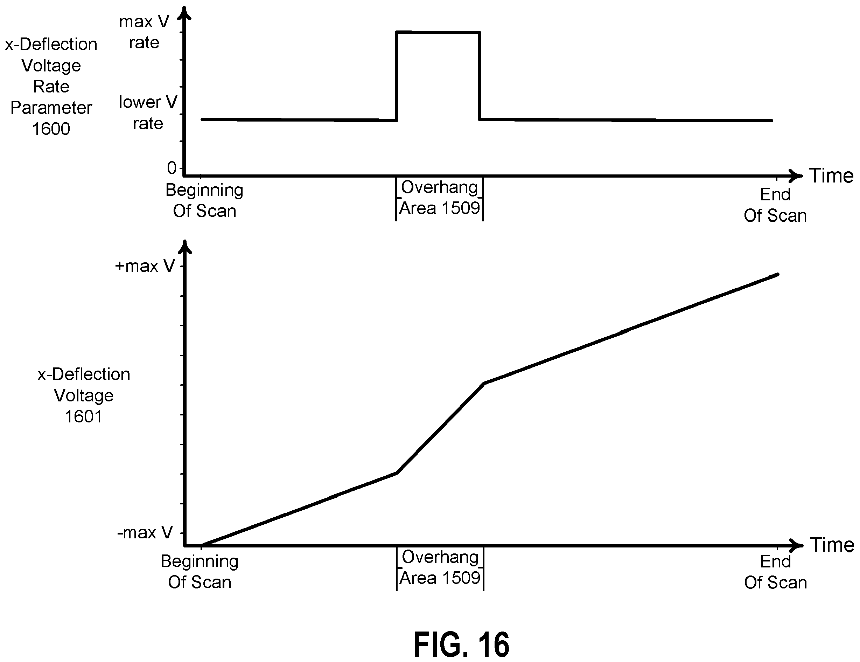

FIG. 16 illustrates an exemplary scanning rate parameter of PBF apparatus 1500. In particular, FIG. 16 illustrates how the scanning rate parameter can have different values during the scanning operation of the energy beam shown in FIGS. 15B-C. In this example, the scanning rate parameter is x-deflection voltage rate parameter 1600. Controller 1517 can control the scanning rate of the energy beam based on x-deflection voltage rate parameter 1600. More specifically, controller 1517 can use x-deflection voltage rate parameter 1600 to determine how quickly to change an x-deflection voltage 1601 that is applied to deflection plates (such as x-deflection plates 1215 in FIG. 12) to deflect the energy beam.

FIG. 16 shows a graph of x-deflection voltage rate parameter 1600 over time, from the beginning of the scan to the end of the scan in the example of FIGS. 15B-C. In this example, the scan begins at the left side (as seen in the figure) of powder bed 1505 and tracks to the right, crosses over overhang area 1509, and continues over the remainder of build piece 1503. At the beginning of the scan, x-deflection voltage rate parameter 1600 is set to a lower voltage rate parameter value, which equates to the slower scanning rate of PBF apparatus 1500. When the energy beam reaches overhang area 1509, x-deflection voltage rate parameter 1600 changes to a higher voltage rate parameter value, so that the energy beam is scanned across the overhang area at a faster scanning rate, shown as faster-scanning energy beam 1519 in FIG. 15B. When the energy beam reaches the end of overhang area 1509, x-deflection voltage rate parameter 1600 changes back to the lower voltage rate parameter value, so that the energy beam is scanned across the remainder of build piece 1503 at the slower scanning rate, shown as slower-scanning energy beam 1521 in FIG. 15C.

FIG. 16 also shows a graph of x-deflection voltage 1601 to illustrate how the x-deflection voltage is controlled based on x-deflection voltage rate parameter 1600. From the beginning of the scan to the time the energy beam begins scanning across overhang area 1509, x-deflection voltage 1601 increases a rate corresponding to the lower voltage rate parameter value, i.e., the slope of the x-deflection voltage graph line in this period of time corresponds to the lower voltage rate. When the energy beam begins scanning across overhang area 1509, the slope of the x-deflection voltage graph line changes, i.e., the slope of the line is increased to correspond to the higher voltage rate parameter value. When the energy beam finishes scanning across overhang area 1509, the slope of the x-deflection voltage graph line decreases to correspond to the lower voltage rate parameter value. In various embodiments, the values of x-deflection voltage rate parameter 1600 can be stored in a memory prior to a printing operation of PBF apparatus 1500. In various embodiments, the values of x-deflection voltage parameter 1600 can be modified during the printing operation, e.g., based on feedback information such as slice edge information, sagging detection, etc.

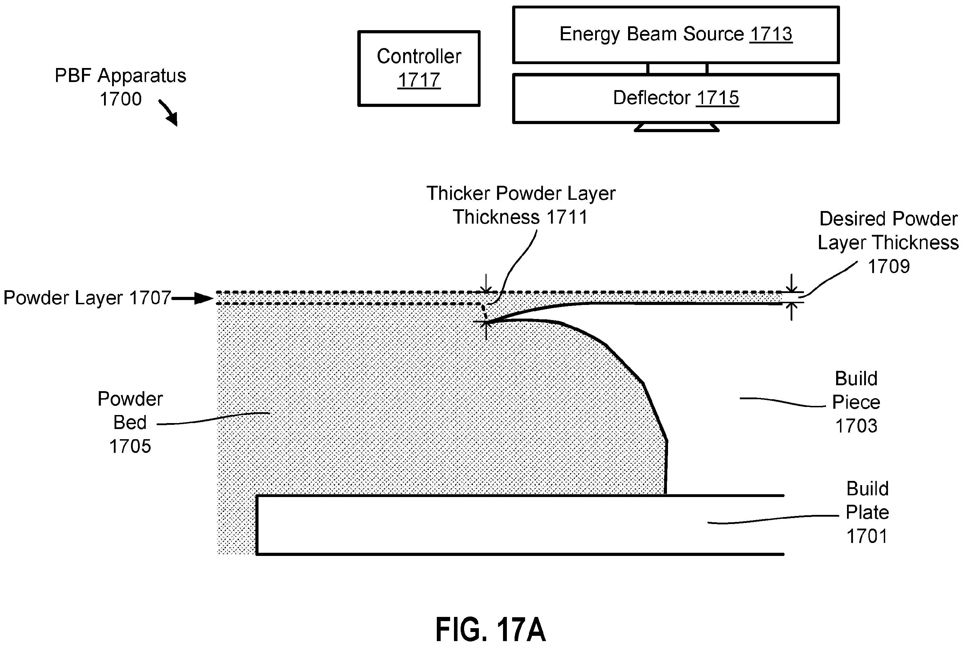

FIGS. 17A-C illustrate an exemplary embodiment of a PBF apparatus 1700 and method in which energy can be applied to a layer of powder material with the energy beam at a first power at a first time and applied a second power at a second time based on different values of an applied-beam power parameter. In this example, the use of different beam powers can help mitigate a sagging that has occurred in a previous layer of a build piece.

PBF apparatus 1700 includes a build plate 1701 on which a build piece 1703 is formed in a powder bed 1705. Powder bed 1705 includes a powder layer 1707 with a desired powder layer thickness 1709. A portion of powder layer 1707 has a thicker powder layer thickness 1711 that is over a sagging part of build piece 1703 and, therefore, is thicker than desired powder layer thickness 1709. PBF apparatus 1700 also includes an energy beam source 1713 and a deflector 1715. A controller 1717 can control energy beam source 1713 and deflector 1715 based on parameters, such as an applied-beam power parameter, that can be set by controller 1717 and stored in a memory (not shown). In this example, the applied-beam power parameter can have a higher value to compensate for the increased thickness of powder layer 1707 over the sagging part of build piece 1703 and can have a lower value when fusing other areas. More specifically, the applied-beam power parameter can have a value that equates to a higher-power beam and a value that equates to a lower-power beam.

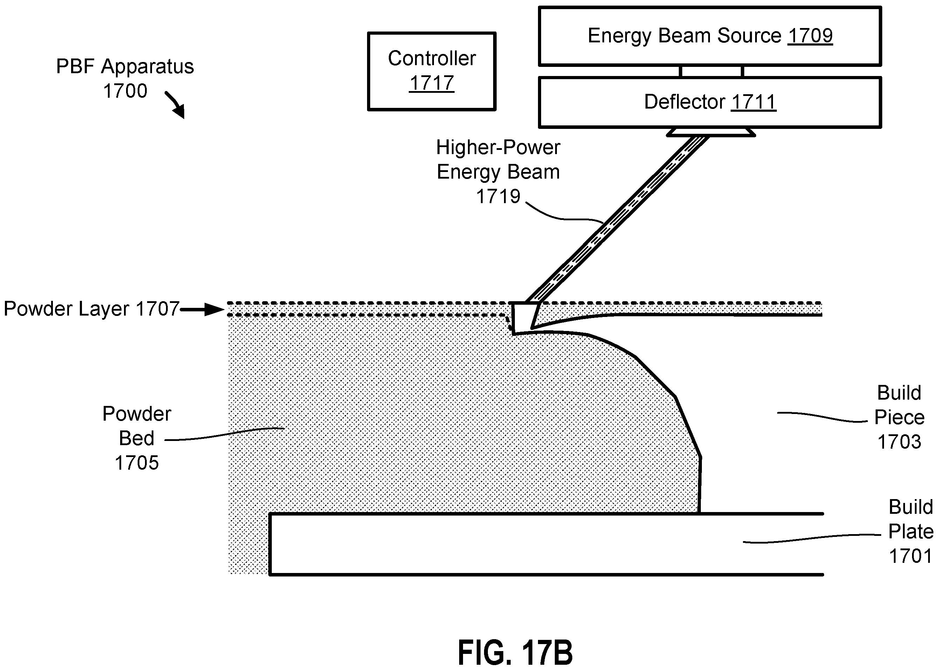

FIG. 17B illustrates the fusing of powder in a portion of powder layer 1707 with thicker powder layer thickness 1711 using an applied-beam power parameter set to a higher beam power. Specifically, in order to fuse the portion of powder layer 1707 with thicker powder layer thickness 1711, controller 1717 instructs energy beam source 1713 to increase the beam power based on the higher applied-beam power parameter value to effectuate a higher-power energy beam 1719 when scanning over the thicker portion of the powder layer. In this way, for example, more energy can be applied to the portion of powder layer 1707 with thicker powder layer thickness 1711 so that the powder can be completely fused.

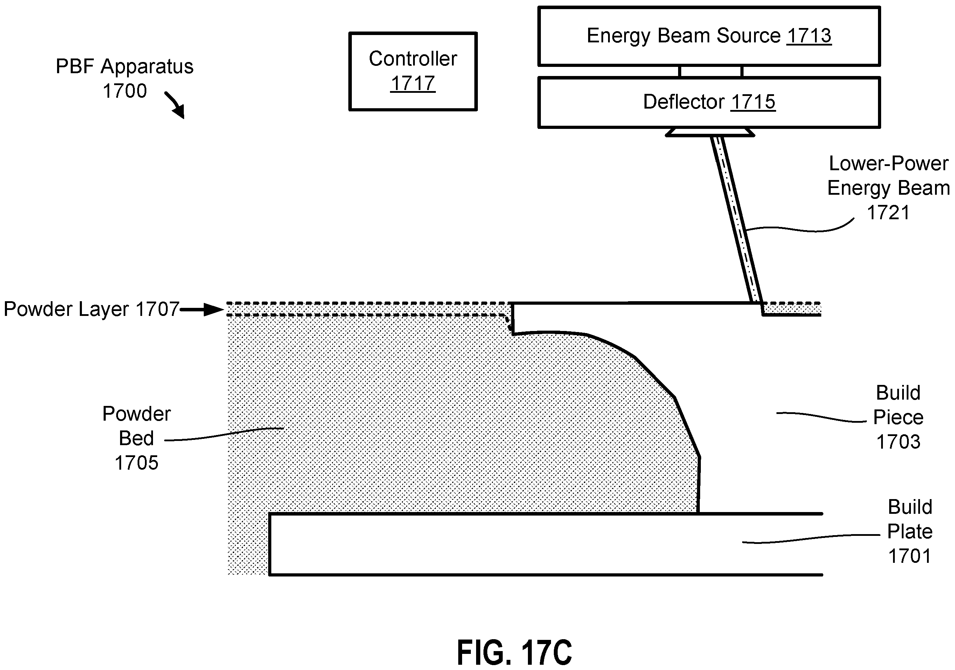

FIG. 17C illustrates the fusing of powder in a portion of powder layer 1707 with desired powder layer thickness 1709. In this case, controller 1717 can instruct energy beam source 1713 to lower the beam power based on a lower applied-beam power value to effectuate a lower-power energy beam 1721, which can be the beam power used to fuse powder with desired powder layer thickness 1709 completely.

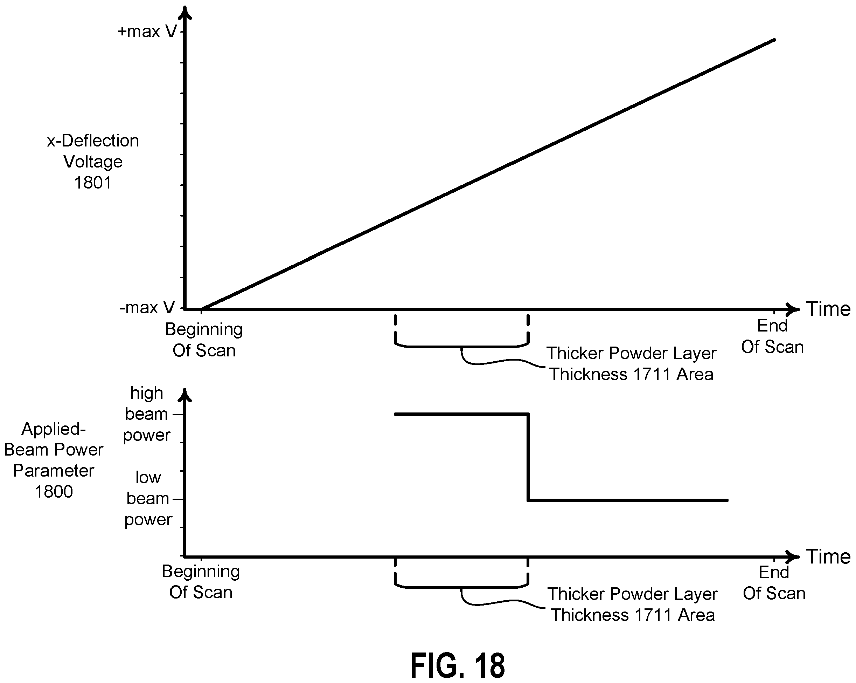

FIG. 18 illustrates an exemplary applied-beam power parameter 1800 of PBF apparatus 1700. In particular, FIG. 18 illustrates how applied-beam power parameter 1800 changes during the fusing of powder material by the energy beam shown in FIGS. 17B-C. Controller 1717 can control the applied-beam power of the energy beam based on applied-beam power parameter 1800. In other words, controller 1717 can use applied-beam power parameter 1800 to determine the power of the energy beam generated by energy beam source 1713 during time periods that the energy beam is applied (i.e., not off). For example, the energy beam is applied when used for fusing powder and/or other operations, such as heating portions of the powder bed without fusing, controlling the cooling rate of fused powder by applying the energy beam at a low power, etc.

One example of an applied-beam power parameter is a grid voltage of an electron beam source, such as electron grid 1201 and electron grid modulator 1203 in FIG. 12. In this case, for example, a controller can control the grid voltage based on applied-beam power parameter values.

FIG. 18 shows a graph of x-deflection voltage 1801 to illustrate that the scanning rate does not change in this example (however, in various embodiments, both scanning rate and applied-beam power can change). Controller 1717 can scan the energy beam by applying an x-deflection voltage to deflection plates (such as x-deflection plates 1215 in FIG. 12). In this example, the scan begins at the left side (as seen in the figure) of powder bed 1705 and tracks to the right, crosses over thicker powder layer thickness 1711 area, and continues over the remainder of build piece 1703. From the beginning of the scan to the end of the scan, controller 1717 scans the energy beam at a constant scanning rate, i.e., the slope of the x-deflection voltage does not change.

FIG. 18 also shows a graph of an applied-beam power parameter 1800 over time, from the beginning of the scan to the end of the scan in the example of FIGS. 17B-C. At the beginning of the scan, controller 1717 can keep the beam power off (i.e., zero power) because the energy beam is being scanned over an area of powder bed 1705 that is not to be fused. In this regard, it should be understood that there is no applied-beam power parameter value associated with periods of time during which the energy beam is off. When the energy beam reaches thicker powder layer thickness 1711 area, i.e., the beginning of powder fusing in this powder layer, controller 1717 can read the value of applied-beam power parameter 1800 from memory. In this example, the applied-beam power is a high beam power value, and controller 1717 can control energy beam source 1713 to generate a high-power energy beam when the beam is fusing powder material in the thicker powder layer thickness area, which is shown as higher-power energy beam 1719 in FIG. 17B. When the energy beam reaches the end of thicker powder layer thickness 1711 area, controller 1717 can read the value of applied-beam power parameter 1800 from memory, and the read applied-beam power parameter value is a different value, i.e., a low beam power value. Therefore, controller 1717 can control energy beam source 1713 to generate a low-power energy beam when the beam is fusing powder material in the remainder of build piece 1703, which is shown as lower-power energy beam 1721 in FIG. 17C. In this way, for example, the fusing of powder material in powder layer 1707 can be based on multiple values of applied-beam power parameter 1800, e.g., a lower beam power and a higher beam power are used to fuse powder material in the layer. In other words, multiple non-zero beam powers can be applied in a powder layer. When the energy beam reaches the end of build piece (not shown), controller 1717 can turn the beam power off.

In various embodiments, the values of applied-beam power parameter 1800 can be set by a controller and stored in a memory prior to a printing operation of PBF apparatus 1700. In various embodiments, the values of applied-beam power parameter 1800 can be modified during the printing operation, e.g., by a controller and based on feedback information such as slice edge information, sagging detection, etc.

Although the exemplary embodiments of FIGS. 16 and 18, and other exemplary embodiments described herein, illustrate examples in which different values of a parameter are applied sequentially during the slice printing operation (i.e., one right after the other), it should be understood that different values of a parameter can be applied non-sequentially. For example, a lower applied-beam power can be used to fuse a build piece in one area of the powder layer, the energy beam can be turned off while being scanned to another area of the powder layer, and the energy beam can be applied at a higher applied-beam power to a build piece in the other area.

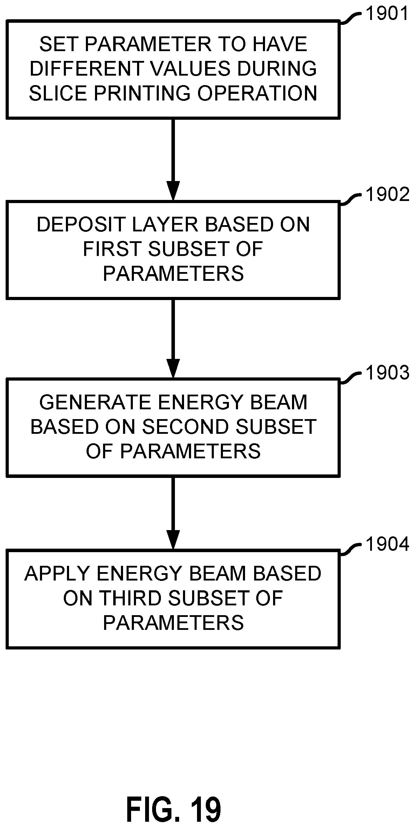

FIG. 19 is a flow chart of an exemplary method of a slice printing operation with variable print parameters in a PBF apparatus. The PBF apparatus can set (1901) a parameter (or multiple parameters) to have different values during a slice printing operation. In other words, the PBF apparatus can set a parameter (or multiple parameters) to have a first value at a first time during a time period and to have a second value different than the first value during the time period, where the time period begins at a start of the depositing of a layer of powder and ends at an end of the fusing of the layer. The PBF apparatus can deposit (1902) a layer of a powder material based on a first subset of the parameters. The PBF apparatus can generate (1903) an energy beam based on a second subset of the parameters and can apply (1904) the energy beam to fuse the layer at a plurality of locations based on a third subset of the parameters.

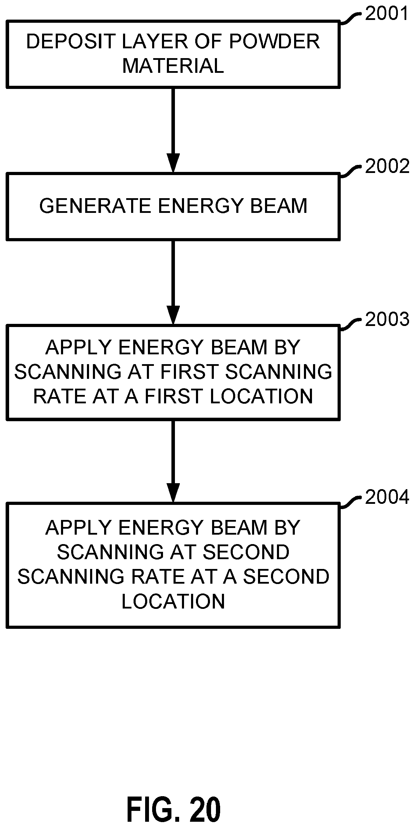

FIG. 20 is a flow chart of an exemplary method of a slice printing operation with variable values of a scanning rate parameter in a PBF apparatus. The PBF apparatus can deposit (2001) a layer of a powder material and can generate (2002) an energy beam. The PBF apparatus can apply (2003) the energy beam by scanning the beam at a first scanning rate at a first location in the powder layer. The PBF apparatus can apply (2004) the energy beam by scanning the beam at a second scanning rate at a second location in the powder layer.

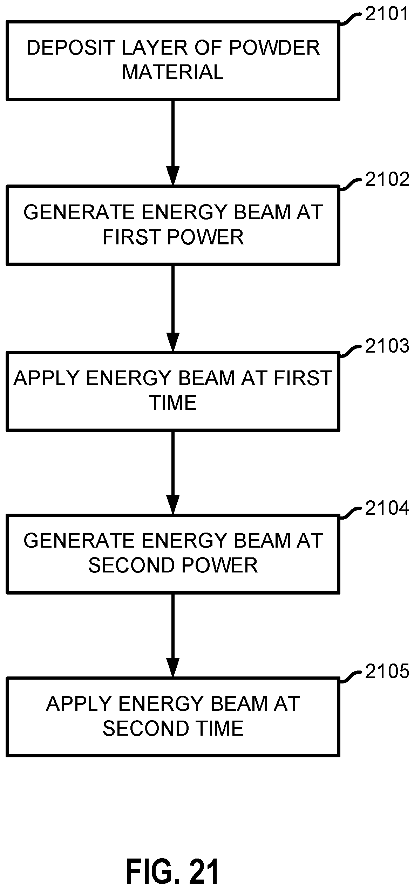

FIG. 21 is a flow chart of an exemplary method of a slice printing operation with variable values of an applied-beam power parameter in a PBF apparatus. The PBF apparatus can deposit (2101) a layer of a powder material. The PBF apparatus can generate (2102) an energy beam at a first power and can apply (2103) the energy beam at the first power at a first time. The PBF apparatus can generate (2104) an energy beam at a second power and can apply (2105) the energy beam at the second power at a second time.

It should be appreciated that various embodiments can include combinations of the exemplary embodiments described herein. For example, powder layers can be deposited with multiple materials and then fused using different scanning rates and/or applied-beam powers, etc.

The previous description is provided to enable any person skilled in the art to practice the various aspects described herein. Various modifications to these exemplary embodiments presented throughout this disclosure will be readily apparent to those skilled in the art. Thus, the claims are not intended to be limited to the exemplary embodiments presented throughout the disclosure, but are to be accorded the full scope consistent with the language claims. All structural and functional equivalents to the elements of the exemplary embodiments described throughout this disclosure that are known or later come to be known to those of ordinary skill in the art are intended to be encompassed by the claims. Moreover, nothing disclosed herein is intended to be dedicated to the public regardless of whether such disclosure is explicitly recited in the claims. No claim element is to be construed under the provisions of 35 U.S.C. §112(f), or analogous law in applicable jurisdictions, unless the element is expressly recited using the phrase "means for" or, in the case of a method claim, the element is recited using the phrase "step for."

The present disclosure may be described further with respect to the following consistory clauses:
1. An apparatus for powder-bed fusion, comprising:
   a depositor that deposits a layer including a powder material and a second material different from the powder material, such that at least a portion of the powder material is in an area that is devoid of the second material;
   an energy beam source that generates an energy beam; and
   deflector that applies the energy beam to fuse the layer at a plurality of locations.
2. The apparatus of clause 1, wherein the second material includes a second powder material.
3. The apparatus of clause 2, wherein the depositor is further configured to deposit a second portion of the powder material and a portion of the second powder material at one of the locations, and the deflector is configured to apply the energy beam to fuse the powder material and the second powder material together at said one of the locations.
4. The apparatus of clause 2, wherein the powder material includes a first metal and the second powder material includes a second metal.
5. The apparatus of clause 2, wherein the powder material includes a powder having a first size distribution, and the second powder material includes a powder having a second size distribution different from the first size distribution.
6. The apparatus of clause 1, wherein the depositor is further configured to deposit the second material such that at least a portion of the second material is in a second area that is devoid of the powder material.
7. The apparatus of clause 6, wherein the depositor is further configured to deposit the powder material in the second area, and the depositor includes a powder remover that removes the powder material from the second area prior to depositing the portion of the second material in the second area.
8. The apparatus of clause 7, wherein the powder remover includes a vacuum that suctions the powder material from the second area.
9. The apparatus of clause 1, wherein the depositor includes a vibrator that deposits the second material.
10. The apparatus of clause 1, wherein the depositor includes a blower that deposits the second material.
11. The apparatus of clause 1, wherein the depositor includes a moveable arm that deposits the second material.
12. An apparatus for powder-bed fusion, comprising:
   a depositor that deposits a layer including a powder material based on a first subset of a plurality of parameters;
   an energy beam source that generates an energy beam based on a second subset of the parameters;
   a deflector that applies the energy beam to fuse the layer at a plurality of locations based on a third subset of the parameters; and
   a controller that sets at least one of the parameters to have a first value at a first time during a time period and to have a second value different than the first value during the time period, the time period beginning at a start of the depositing of the layer of powder and ending at an end of the fusing of the layer at the locations.
13. The apparatus of clause 12, wherein the parameters include a scanning rate parameter, and the controller sets the first and second values of the scanning rate parameter such that the deflector scans the energy beam at a first scanning rate at a first one of the locations and scans the energy beam at a second scanning rate different from the first scanning rate at a second one of the locations.
14. The apparatus of clause 13, wherein the deflector is further configured to apply the energy beam to fuse the powder material in an area including the first and second ones of the locations, the area having an outer edge, the first one of the locations being closer to the outer edge than the second one of the locations, and wherein the first scanning rate is slower than the second scanning rate.
15. The apparatus of clause 13, wherein the depositor is further configured to deposit a second material different from the powder material, such that at least a portion of the powder material is in an area that is devoid of the second material.
16. The apparatus of clause 12, wherein the parameters include an applied-beam power parameter, and the controller sets the first and second values of the applied-beam power parameter such that the energy beam source generates the energy beam at a first power at a first time during the time period and generates the energy beam at a second power at a second time during the time period, the first power being different from the second power.
17. The apparatus of clause 16, wherein the depositor is further configured to deposit a second material different from the powder material, such that at least a portion of the powder material is in an area that is devoid of the second material.
18.The apparatus of clause 16, wherein the deflector is further configured to scan the energy beam at a first scanning rate at a first one of the locations and scanning the energy beam at a second scanning rate different from the first scanning rate at a second one of the locations.
19. The apparatus of clause 18, wherein the depositor is further configured to deposit a second material different from the powder material, such that at least a portion of the powder material is in an area that is devoid of the second material.
20. A method for powder-bed fusion, comprising:
   depositing a layer including a powder material and a second material different from the powder material, such that at least a portion of the powder material is in an area that is devoid of the second material;
   generating an energy beam; and
   applying the energy beam to fuse the layer at a plurality of locations.
21. The method of clause 20, wherein the second material includes a second powder material.
22. The method of clause 21, wherein depositing the layer further includes depositing a second portion of the powder material and a portion of the second powder material at one of the locations, and applying the energy beam fuses the powder material and second powder material together at said one of the locations.
23. The method of clause 21, wherein the powder material includes a first metal and the second powder material includes a second metal.
24. The method of clause 21, wherein the powder material includes a powder having a first size distribution, and the second powder material includes a powder having a second size distribution different from the first size distribution.
25. The method of clause 20, wherein depositing the layer further includes depositing the second material such that at least a portion of the second material is in a second area that is devoid of the powder material.
26. The method of clause 25, wherein the depositing the layer further includes depositing the powder material in the second area, and the method further comprises removing the powder material from the second area prior to depositing the portion of the second material in the second area.
27. The method of clause 26, wherein removing the powder material includes suctioning the powder material from the second area.
28. The method of clause 20, wherein depositing the second material includes vibrating the second material.
29. The method of clause 20, wherein depositing the second material includes blowing the second material.
30. The method of clause 20, wherein depositing the second material includes controlling a moveable arm to deposit the second material.
31. A method for powder-bed fusion, comprising:
   depositing a layer including a powder material based on a first subset of a plurality of parameters;
   generating an energy beam based on a second subset of the parameters;
   applying the energy beam to fuse the layer at a plurality of locations based on a third subset of the parameters; and
   setting at least one of the parameters to have a first value at a first time during a time period and to have a second value different than the first value during the time period, the time period beginning at a start of the depositing of the layer of powder and ending at an end of the fusing of the layer at the locations.
32. The method of clause 31, wherein the parameters include a scanning rate parameter, and setting at least one of the parameters includes setting the first and second values of the scanning rate parameter such that applying the energy beam includes scanning the energy beam at a first scanning rate at a first one of the locations and scanning the energy beam at a second scanning rate different from the first scanning rate at a second one of the locations.
33. The method of clause 32, wherein scanning the energy beam includes applying the energy beam to fuse the powder material in an area including the first and second ones of the locations, the area having an outer edge, the first one of the locations being closer to the outer edge than the second one of the locations, and wherein the first scanning rate is slower than the second scanning rate.
34. The method of clause 32, wherein depositing the layer includes depositing a second material different from the powder material, such that at least a portion of the powder material is in an area that is devoid of the second material.
35. The method of clause 31, wherein the parameters include an applied-beam power parameter, and setting at least one of the parameters includes setting the first and second values of the applied-beam power parameter such that generating the energy beam includes generating the energy beam at a first power at a first time during the time period and generating the energy beam at a second power at a second time during the time period, the first power being different from the second power.
36.The method of clause 35, wherein depositing the layer includes depositing a second material different from the powder material, such that at least a portion of the powder material is in an area that is devoid of the second material.
37.The method of clause 35, wherein directing the energy beam includes scanning the energy beam at a first scanning rate at a first one of the locations and scanning the energy beam at a second scanning rate different from the first scanning rate at a second one of the locations.
38.The method of clause 37, wherein depositing the layer includes depositing a second material different from the powder material, such that at least a portion of the powder material is in an area that is devoid of the second material.

## Claims

1. An apparatus for powder-bed fusion, comprising:
a depositor that deposits a layer including a powder material based on a first subset of a plurality of parameters;
an energy beam source that generates an energy beam based on a second subset of the parameters;
a deflector that applies the energy beam to fuse the layer at a plurality of locations based on a third subset of the parameters; and
a controller that sets at least one of the parameters to have a first value at a first time during a time period and to have a second value different than the first value during the time period, the time period beginning at a start of the depositing of the layer of powder and ending at an end of the fusing of the layer at the locations.

2. The apparatus of claim 1, wherein the parameters include a scanning rate parameter, and the controller sets the first and second values of the scanning rate parameter such that the deflector scans the energy beam at a first scanning rate at a first one of the locations and scans the energy beam at a second scanning rate different from the first scanning rate at a second one of the locations.

3. The apparatus of claim 2, wherein the deflector is further configured to apply the energy beam to fuse the powder material in an area including the first and second ones of the locations, the area having an outer edge, the first one of the locations being closer to the outer edge than the second one of the locations, and wherein the first scanning rate is slower than the second scanning rate.

4. The apparatus of claim 2, wherein the depositor is further configured to deposit a second material different from the powder material, such that at least a portion of the powder material is in an area that is devoid of the second material.

5. The apparatus of claim 1, wherein the parameters include an applied-beam power parameter, and the controller sets the first and second values of the applied-beam power parameter such that the energy beam source generates the energy beam at a first power at a first time during the time period and generates the energy beam at a second power at a second time during the time period, the first power being different from the second power.

6. The apparatus of claim 5, wherein the depositor is further configured to deposit a second material different from the powder material, such that at least a portion of the powder material is in an area that is devoid of the second material.

7. The apparatus of claim 5, wherein the deflector is further configured to scan the energy beam at a first scanning rate at a first one of the locations and scanning the energy beam at a second scanning rate different from the first scanning rate at a second one of the locations.

8. The apparatus of claim 7, wherein the depositor is further configured to deposit a second material different from the powder material, such that at least a portion of the powder material is in an area that is devoid of the second material.

9. A method for powder-bed fusion, comprising:
depositing a layer including a powder material based on a first subset of a plurality of parameters;
generating an energy beam based on a second subset of the parameters;
applying the energy beam to fuse the layer at a plurality of locations based on a third subset of the parameters; and
setting at least one of the parameters to have a first value at a first time during a time period and to have a second value different than the first value during the time period, the time period beginning at a start of the depositing of the layer of powder and ending at an end of the fusing of the layer at the locations.

10. The method of claim 9, wherein the parameters include a scanning rate parameter, and setting at least one of the parameters includes setting the first and second values of the scanning rate parameter such that applying the energy beam includes scanning the energy beam at a first scanning rate at a first one of the locations and scanning the energy beam at a second scanning rate different from the first scanning rate at a second one of the locations.

11. The method of claim 10, wherein scanning the energy beam includes applying the energy beam to fuse the powder material in an area including the first and second ones of the locations, the area having an outer edge, the first one of the locations being closer to the outer edge than the second one of the locations, and wherein the first scanning rate is slower than the second scanning rate.

12. The method of claim 10, wherein depositing the layer includes depositing a second material different from the powder material, such that at least a portion of the powder material is in an area that is devoid of the second material.

13. The method of claim 9, wherein the parameters include an applied-beam power parameter, and setting at least one of the parameters includes setting the first and second values of the applied-beam power parameter such that generating the energy beam includes generating the energy beam at a first power at a first time during the time period and generating the energy beam at a second power at a second time during the time period, the first power being different from the second power.

14. The method of claim 13, wherein depositing the layer includes depositing a second material different from the powder material, such that at least a portion of the powder material is in an area that is devoid of the second material.

15. The method of claim 13, wherein directing the energy beam includes scanning the energy beam at a first scanning rate at a first one of the locations and scanning the energy beam at a second scanning rate different from the first scanning rate at a second one of the locations.

16. The method of claim 15, wherein depositing the layer includes depositing a second material different from the powder material, such that at least a portion of the powder material is in an area that is devoid of the second material.
